# EUROPÄISCHE PATENTSCHRIFT

(11) **EP 3 913 034 B1**
(45) Veröffentlichungstag und Bekanntmachung des Hinweises auf die Patenterteilung: **31.05.2023**
(21) Anmeldenummer: 20175846.3
(22) Anmeldetag: 20.05.2020
(51) Int. Cl.: C09K 21/10, C08L 9/00, C08K 3/22, C08K 3/04, C08K 5/49, C08K 3/32, C08K 5/053, C08L 85/00, A62C 2/06, C08K 5/15, C08K 5/3492, E04B 1/94

(54) **ISOCYANATFREIE BRANDSCHUTZELEMENTE**
ISOCYANATE-FREE FIREPROOFING ELEMENTS
ÉLÉMENTS DE PROTECTION CONTRE L'INCENDIE SANS ISOCYANATE

(43) Veröffentlichungstag der Anmeldung: 24.11.2021
(73) Patentinhaber: ZZ Brandschutz GmbH & Co. KG, 50769 Köln (DE)
(72) Erfinder: FOELLER, Maximilian, 50769 Köln (DE); VOLKMER, Lars, 50769 Köln (DE); TOTH, Dr., Philipp, 50769 Köln (DE)
(74) Vertreter: Kinkeldey, Daniela

(56) Entgegenhaltungen:
- WO-A1-2005/003254
- CN-A- 109 385 216
- JP-A- 2019 189 777
- US-B1- 6 429 246

## Beschreibung

Die vorliegende Erfindung betrifft Brandschutzelemente umfassend A) eine intumeszierende Komponente und B) eine Polymermatrix, wobei die Polymermatrix B) erhältlich ist durch Reaktion einer ersten Komponente B1) umfassend wenigstens ein Hydroxyl- und/oder Amino-funktionalisiertes gesättigtes oder ungesättigtes Polyolefin, und einer zweiten Komponente B2) umfassend wenigstens ein mit wenigstens einer aktivierten Carbonylgruppe funktionalisiertes gesättigtes oder ungesättigtes Polyolefin.

Zudem betrifft die Erfindung ein feuerhemmendes Bauteil umfassend ein erfindungsgemäßes Brandschutzelement; ein Verfahren zur Herstellung eines erfindungsgemäßen Brandschutzelements; sowie eine entsprechende 2-Komponenten-Vergussmasse. Des Weiteren betrifft die Erfindung die Verwendung eines erfindungsgemäßen Brandschutzelements in Landfahrzeugen, Wasserfahrzeugen, Luftfahrzeugen und/oder im Fahrzeugbau; und besonders bevorzugt in Schienenfahrzeugen.

### HINTERGRUND

Im Rahmen der vorliegenden Erfindung sind Brandschutzelemente solche Elemente, die bei Einwirkung von Feuer und/oder Hitze aufschäumen und dabei einen isolierenden, feuerabweisenden Schaum bzw. Karbonschaum ausbilden, der vom Feuer rückwärtige Bezirke vor der Feuereinwirkung schützt.

Intumeszierende Brandschutzelemente sind aus dem Stand der Technik bekannt.

Die WO 2005/003254 betrifft Brandschutzelemente umfassend, (A) eine intumeszierende Komponente umfassend wenigstens ein Cyanursäurederivat, wenigstens ein Zuckerpolyol, wenigstens ein Ammoniumpolyphosphat, wenigstens einen Blähgraphit und Aluminiumhydroxid; und (B) einen verbundbildenden Träger (Basiswerkstoff), wobei die Komponente (A) homogen im verbundbildenden Träger (Basiswerkstoff) (B) verteilt ist, ein daraus erhältliches feuerhemmendes Bauteil und Verfahren zu dessen Herstellung.

Zusammensetzungen für Brandschutzelemente sind ebenfalls in JP2019189777 offenbart.

Die aus dem Stand der Technik bekannten Systeme sind mit verschiedenen Nachteilen behaftet, die es zu überwinden gilt:
Intumeszierende Brandschutzelemente werden häufig als Vergusssysteme eingesetzt. Dabei wird in der Regel auf reaktive Rohmaterialien zurückgegriffen. Diese Rohmaterialien werden üblicherweise kurz vor der Applikation vermischt und in die zu verfüllende Öffnung gegeben, in der sie dann ausreagieren. Bei den herkömmlichen Systemen werden jedoch häufig Reaktivrohstoffe verwendet, welche gesundheitsgefährdend (z.B. giftig, (vermutlich) krebserregend, reizend) und /oder umweltgefährdend (z.B. giftig für Wasserorganismen) sind. Diese Stoffe gilt es zu vermeiden.

Besonders kritisch sind die gefährlichen Eigenschaften, wenn die entsprechenden Komponenten in offenen Gefäßen wie Eimern miteinander verrührt werden müssen, da hier eine erhöhte Gefahr für die Anwender durch Kontakt damit, wie durch Spritzer, besteht. Zudem kann es zu sehr langen Aushärtedauern kommen, wodurch die Gefährdung durch die vergossenen, aber noch nicht abreagierten Reaktivkomponenten für einen längeren Zeitraum vorliegt.

Ein weiterer Nachteil bekannter Systeme sind eine große Anzahl an Einzelkomponenten, sowie ein hoher Arbeitsaufwand beim Vorbereiten der Brandschutzsysteme. Einige Systeme verlangen beispielsweise ein manuelles Verrühren von Harz- und Härterkomponente vor der Applikation der Vergussmasse. Andere Systeme verlangen eine umfangreiche Vorbereitung der zum Brandschutz vorgesehenen Bauteile mit Schwämmchen, welche mit Imprägnierflüssigkeit vorbereitet werden müssen. Zudem weisen derartige Systeme üblicherweise Materialeigenschaften auf, welche eine Nachbelegung nur bedingt zulassen. Auch diese Nachteile gilt es zu vermeiden.

Zudem sind lange Aushärtezeiten und damit einhergehend erzwungene Arbeitsunterbrechungen weitere nachteilige Eigenschaften bekannter intumeszierender Systeme bzw. Brandschutzelemente. Bei den meisten Vergussmassen zum Schottabschluss müssen die verwendeten Materialien über lange Zeiträume aushärten. Um die nötige Dichtigkeit des Systems zu garantieren ist für den Zeitraum der Aushärtung darauf zu achten, dass sich die Schottbelegung relativ zur Wand nicht bewegt, da dadurch Lücken und Risse entstehen können. Bereits Arbeiten in der Nähe des Schotts können zu Vibrationen und Erschütterungen führen, die die Integrität des Schotts gefährden. Dies macht längere Arbeitsunterbrechungen für den Zeitraum der Aushärtung nötig. Vor allem bei Großprojekten führen derartige Verzögerungen zu hohen Kosten, was die Verwendung solcher Materialien unvorteilhaft macht.

Aufgabe der vorliegenden Erfindung ist die Bereitstellung von Brandschutzelementen mit verbesserten Eigenschaften, welche die Nachteile bekannter Systeme überwinden. Insbesondere sollen die Brandschutzelemente im Wesentlichen frei von gefährlichen Komponenten und Verbindung herstellbar sein. Zudem sollen die Brandschutzelemente zufriedenstellende mechanische Eigenschaften für den Einsatz im Fahrzeugbau und insbesondere für den Einsatz in Schienenfahrzeugen aufweisen.

Diese und weitere Aufgaben werden durch die hierin offenbarte Erfindung gelöst.

### ZUSAMMENFASSUNG DER ERFINDUNG

Ein erster Gegenstand der Erfindung sind Brandschutzelemente, umfassend
A) eine intumeszierende Komponente und
B) eine Polymermatrix, erhältlich durch Reaktion
   - einer ersten Komponente B1) umfassend wenigstens ein Hydroxyl- und/oder Amino-funktionalisiertes gesättigtes oder ungesättigtes Polyolefin, und
   - einer zweiten Komponente B2) umfassend wenigstens ein mit wenigstens einer aktivierten Carbonylgruppe funktionalisiertes gesättigtes oder ungesättigtes Polyolefin.

Diese erfindungsgemäßen Brandschutzelemente weisen überraschenderweise unter anderem die folgenden Vorteile auf:
- Die Brandschutzelemente sind im Wesentlichen frei von gefährlichen, also gesundheitsgefährdenden und umweltgefährdenden Komponenten. Insbesondere können Rohstoffe mit den Gefahrenstoffkennzeichnungen H340, H341, H350, H351, H360, H361, H362 sowie sog. CMR-Substanzen (relevanter Zeitpunkt ist der Anmeldetag) vermieden werden.
- Die Brandschutzelemente können in einem einfachen und sicheren Prozess hergestellt werden.
- Die Aushärtezeit der Brandschutzelemente ist vergleichsweise kurz.
- Die Brandschutzelemente der vorliegenden Erfindung zeigen vorteilhafte mechanische Eigenschaften.
- Die Brandschutzelemente der vorliegenden Erfindung sind wasserfest und druckfest.
- Die Brandschutzelemente der vorliegenden Erfindung zeigten vorteilhafte intumeszierende Eigenschaften.

Ein weiterer Gegenstand der vorliegenden Erfindung sind feuerhemmende Bauteile umfassend wenigstens ein erfindungsgemäßes Brandschutzelement mit wenigstens einer daran angeordneten Deckschicht.

Ein weiterer Gegenstand der vorliegenden Erfindung sind Verfahren zur Herstellung eines erfindungsgemäßen Brandschutzelements, umfassend
a) Bereitstellen der Komponente B1) und optionales Vermischen mit einem oder mehreren Bestandteil(en) der Komponente A);
b) Bereitstellen der Komponente B2) und optionales Vermischen mit einem oder mehreren Bestandteil(en) der Komponente A);
c) homogenes Mischen der in Schritt a) und in Schritt b) erhaltenen Zusammensetzungen;
d) gegebenenfalls Vermischen mit weiteren Bestandteilen; und
e) Aushärten der in Schritt d) erhaltenen Zusammensetzung.

Ein weiterer Gegenstand der vorliegenden Erfindung sind 2-Komponenten-Vergussmassen umfassend
eine erste Zusammensetzung umfassend
   - wenigstens ein Hydroxyl- und/oder Amino-funktionalisiertes gesättigtes oder ungesättigtes Polyolefin (B1), und
   - optional einen oder mehrere Bestandteil(e) ausgewählt unter Aa) Cyanursäurederivaten, Ab) Zuckerpolyolen, Ac) Phosphor und/oder Phosphor-haltigen Verbindungen, Ad) Blähgraphit und Ae) Aluminiumhydroxid;
und eine zweite Zusammensetzung umfassend
   - wenigstens ein mit wenigstens einer aktivierten Carbonylgruppe funktionalisiertes gesättigtes oder ungesättigtes Polyolefin (B2), und
   - optional einen oder mehrere Bestandteil(e) ausgewählt unter Aa) Cyanursäurederivaten, Ab) Zuckerpolyolen, Ac) Phosphor und/oder Phosphor-haltigen Verbindungen, Ad) Blähgraphit und Ae) Aluminiumhydroxid;
wobei die 2-Komponenten-Vergussmasse wenigstens Phosphor und/oder eine Phosphor-haltige Verbindung (Ac) umfasst.

Des Weiteren betrifft die vorliegende Erfindung die Verwendung eines erfindungsgemäßen Brandschutzelements und/oder eines erfindungsgemäßen feuerhemmenden Bauteils und /oder einer erfindungsgemäßen 2-Komponenten-Vergussmasse insbesondere in Landfahrzeugen, Wasserfahrzeugen, Luftfahrzeugen und/oder im Fahrzeugbau; und besonders bevorzugt in Schienenfahrzeugen.

### AUSFÜHRLICHE BESCHREIBUNG

### Definitionen

Unter "Brandschutzelementen" im Sinne dieser Erfindung werden alle Formteile und/oder Körper verstanden, die geeignet sind in Anwendungen (beispielsweise in Gebäuden und Fahrzeugen), bei der Brandschutzeigenschaften erforderlich sind, eingebaut zu werden. Eine Einschränkung auf bestimmte Anwendungsbereiche und Produkte besteht nicht, da erfindungsgemäß eine Zumischung zu einer Vielzahl von marktgängigen oder neu zu kreierenden Produkten unterschiedlichster Einsatzbereiche möglich ist. Das Einsatzgebiet umfasst somit den gesamten baulichen Brandschutz, Brandschutz in Industrieanlagen, Brandschutz im Schiffsbau, Brandschutz im Fahrzeugbau, Brandschutz in der Automobilbranche, Brandschutz im Flugzeugbau, Brandschutz in der Raumfahrt, Brandschutz im Schienenverkehrswesen.

In Rahmen der vorliegenden Erfindung bedeutet "Intumeszenz" eine Ausdehnung oder eine Anschwellung, also eine Volumenzunahme eines festen Körpers. Beim Brandschutz bezeichnet der Begriff das zweckdienliche Schwellen bzw. Aufschäumen von Materialien. Intumeszierende Baustoffe bzw. Elemente nehmen unter Hitzeeinwirkung an Volumen zu und entsprechend an Dichte ab. In der Regel finden intumeszierende Stoffe im vorbeugenden baulichen Brandschutz Anwendung, wo sie ein oder mehrere der folgenden Aufgaben zu bewältigen haben: a) Aufschäumen, das heißt das Formen einer leichten Isolierungsschicht als Hitzebremse. b) Endotherme Wirkung durch Hydrate, die durch Wasserdampffreisetzung kühlen. c) Aufbringen von Expansionsdruck, beispielsweise um Kavitäten im Brandfall zu versiegeln.

### Intumeszierende Komponente A)

In einer speziell bevorzugten Ausführungsform ist die intumeszierende Komponente A) im Wesentlichen frei von Halogenen und Halogen-haltigen Verbindungen. Der Gehalt an Halogenen und Halogen-haltigen Verbindungen beträgt üblicherweise höchstens 10 Gew.-%, bevorzugt höchstens 5 Gew.-%, weiter bevorzugt höchstens 1 Gew.-%, bezogen auf die Gesamtmenge der intumeszierenden Komponente A).

In einer bevorzugten Ausführungsform umfasst die intumeszierende Komponente A) wenigstens Phosphor und/oder eine Phosphor-haltige Verbindung.

Unter Phosphor-haltigen Verbindungen im Rahmen der vorliegenden Erfindung sind beispielsweise Polyphosphate, also Salze einer Polyphosphorsäure wie beispielsweise der Metaphosphorsäure oder der Orthophosphorsäure, welche beispielsweise als Ammonium-, Natrium-, Kalium-Salz vorliegen. Weitere Beispiele für Phosphor-haltige Verbindungen sind elementarer Phosphor, Salze und Ester der Phosphinsäure, Salze und Ester der Phosphonsäure, Ester der Phosphorsäure.

Weiter bevorzugt umfasst die intumeszierende Komponente A) wenigstens ein Polyphosphat, also ein Salz einer Polyphosphorsäure, beispielsweise der Metaphosphorsäure, der Orthophosphorsäure oder höher kondensiert Phosphorsäuren, die in der Regel als Gemisch vorliegen. Weiter bevorzugt umfasst die intumeszierende Komponente A) wenigstens ein Ammoniumpolyphosphat, das vorzugsweise aus der Gruppe bestehend aus Ammoniummetaphosphorsäure, Ammoniumorthophosphorsäure, Ammoniumsalzen von höher kondensierten Phosphorsäuren und Gemischen davon ausgewählt ist.

Das Ammoniumpolyphosphat dient in der intumeszierenden Komponente als Säurelieferant, wobei im Brandfall Phosphorsäure entsteht, die mit einem Polyol einen Ester bilden kann und damit die Bildung eines Karbonschaums bewirkt.

Technisch wird Ammoniumpolyphosphat beispielsweise durch Erhitzen von Ammoniumphosphat hergestellt.

Der Anteil des Phosphors und/oder der Phosphor-haltigen Verbindung(en) beträgt vorzugsweise 5 bis 90 Gew.-%, bevorzugt 15 bis 45 Gew.-%, bezogen auf die Gesamtmenge der intumeszierenden Komponente A).

Vorzugsweise umfasst die intumeszierende Komponente A) wenigstens Phosphor und/oder eine Phosphor-haltige Verbindung und zusätzlich wenigstens einen weiteren Bestandteil, der vorzugsweise ausgewählt ist unter Cyanursäurederivaten, Zuckerpolyolen, Blähgraphit und Aluminiumhydroxid. Diese Bestandteile werden im Folgenden definiert. Die intumeszierende Komponente A) kann neben dem Phosphor und/oder der Phosphor-haltige Verbindung also zusätzlich einen, zwei, drei oder vier weitere Bestandteile umfassen. Beispielsweise umfasst die intumeszierende Komponente wenigstens zwei, drei, vier oder mehr als vier der folgenden Bestandteile: Aa) wenigstens ein Cyanursäurederivat, Ab) wenigstens ein Zuckerpolyol, Ac) wenigstens Phosphor und/oder eine Phosphor-haltige Verbindung, Ad) wenigstens einen Blähgraphit, Ae) Aluminiumhydroxid, wobei in einer besonders bevorzugten Ausführungsform wenigstens Phosphor und/oder eine Phosphor-haltige Verbindung anwesend ist. In einer bevorzugten Ausführungsform umfasst die intumeszierende Komponente wenigstens zwei, weiter bevorzugt wenigstens drei, weiter bevorzugt wenigstens vier der genannten Bestandteile Aa), Ab), Ac), Ad), Ae), wobei in einer besonders bevorzugten Ausführungsform wenigstens Phosphor und/oder eine Phosphor-haltige Verbindung anwesend ist.

Bevorzugt ist eine Kombination von Blähgraphit mit Ammoniumphosphat und/oder Polyphosphat. Zudem bevorzugt ist eine Kombination von Blähgraphit mit Ammoniumphosphat und/oder Polyphosphat und mit Melamin.

In einer bevorzugten Ausführungsform umfasst die intumeszierende Komponente
Aa) wenigstens ein Cyanursäurederivat,
Ab) wenigstens ein Zuckerpolyol,
Ac) wenigstens Phosphor und/oder eine Phosphor-haltige Verbindung,
Ad) wenigstens einen Blähgraphit und
Ae) Aluminiumhydroxid.

Unter Cyanursäurederivaten im Rahmen der vorliegenden Erfindung ist Cyanursäure und/oder deren Derivate zu verstehen. Dies sind Verbindungen, die sich von Cyanursäure oder Isocyansäure ableiten lassen. Beispiele sind Cyanamid, Dicyanamid, Dicyandiamid, Guanidin und dessen Salze, Biguanid, Melamincyanurat, Cyansäuresalze, Cyansäureester und Cyansäureamide.

Das wenigstens eine Cyanursäurederivat (Komponente Aa) ist bevorzugt ausgewählt aus der Gruppe bestehend aus Cyanamid, Dicyanamid, Dicyandiamid, Guanidin und dessen Salzen, Biguanidin, Melamincyanurat, Cyanursäuresalze, Cyanursäureester, Cyanursäureamide und Gemische davon. In einer bevorzugten Ausführungsform umfasst die intumeszierende Komponente Cyanursäureamid (Melamin).

Die Cyanursäure bzw. das Cyanursäurederivat hat in der intumeszierenden Komponente die Funktion als Gasbildner zu wirken und zersetzt sich im Brandfall zu nichtbrennbaren Gasen. Dies führt zu einem Aufblähen der entstehenden Kohlestrukturen, was zu Intumeszenz führt.

Technisch wird Melamin beispielsweise durch Erhitzen von Dicyanamid in flüssigem Ammoniak auf etwa 220 °C bei 50 bis 60 bar gewonnen.

Der Anteil des wenigstens einen Cyanursäurederivat (Komponente Aa) beträgt vorzugsweise 5 bis 90 Gew.-%, bevorzugt 5 bis 20 Gew.-%, bezogen auf die Gesamtmenge der intumeszierenden Komponente A).

Unter Zuckerpolyolen im Rahmen der vorliegenden Erfindung sind Polyole zu verstehen, die durch Reduktion von vier- bis sechswertigen Monosacchariden entstehen. Beispielsweise ist das Zuckerpolyol ein entsprechender 4- bis 6-wertiger Alkohol.

Das wenigstens eine Zuckerpolyol (Komponente Ab) ist bevorzugt ein 4-, 5- oder 6-wertiger Alkohol, der bevorzugt ausgewählt ist aus der Gruppe bestehend aus Threit, Erythrit, Pentaerythrit, Arabit, Aldonit, Xylit, Sorbit, Mannit, Dulcit, Formit und Gemischen davon. In einer bevorzugten Ausführungsform umfasst die intumeszierende Komponente Pentaerythrit.

Das Zuckerpolyol enthält bevorzugt außer Kohlenstoff-, Wasserstoff- und Sauerstoff Atomen keine weiteren Heteroatome, insbesondere ist kein phosphorhaltiges Zuckerpolyol enthalten.

Das Zuckerpolyol dient in der intumeszierenden Komponente als Kohlenstofflieferant, wobei die OH-Gruppen im Brandfall mit Säuregruppen reagieren können.

Technisch wird Pentaerythrit beispielsweise aus Acetaldehyd und Formaldehyd in einer aldolartigen Addition zu Trimethylolacetaldehyd und nachfolgender Reduktion hergestellt.

Der Anteil des wenigstens einen Zuckerpolyols (Komponente Ab) beträgt vorzugsweise 5 bis 90 Gew.-%, bevorzugt 5 bis 20 Gew.-%, bezogen auf die Gesamtmenge der intumeszierenden Komponente A).

Die Komponente umfassend wenigstens Phosphor und/oder eine Phosphor-haltige Verbindung (Komponente Ac) wurde oben bereits beschrieben, worauf hier vollumfänglich Bezug genommen wird. Der Anteil des Phosphors und/oder der Phosphor-haltigen Verbindung(en) (Komponente Ac) beträgt vorzugsweise 5 bis 90 Gew.-%, bevorzugt 15 bis 45 Gew.-%, bezogen auf die Gesamtmenge der intumeszierenden Komponente A).

Als der wenigstens eine Blähgraphit (Komponente Ad) kommen beispielsweise bekannte Einlagerungsverbindungen von Wasser, Schwefelsäure, Salpetersäure, Essigsäure, Lewissäuren und/oder sonstigen starken Säuren in Graphit in Frage. Diese werden auch als Graphitsalze bezeichnet. Bevorzugt sind erfindungsgemäß Blähgraphite, die bei Temperaturen von beispielsweise 100 bis 350 °C unter Aufblähen charakteristische gasförmige Substanzen, wie SO₂, SO₃, CO₂, H₂O, NO, oder andere charakteristische gasförmige Substanzen, abgeben. Bevorzugt ist somit der Blähgraphit ausgewählt aus der Gruppe, bestehend aus unmodifiziertem Blähgraphit, Einlagerungsverbindungen von Wasser, Schwefelsäure, Salpetersäure, Essigsäure, Lewissäuren und/oder sonstigen starken Säuren in Graphit und Gemischen davon in Frage.

Der Blähgraphit kann beispielsweise in Form von Blättchen mit einem maximalen Durchmesser im Bereich von 0,01 bis 5 mm, bevorzugter 0,1 bis 5 mm, insbesondere 0,5 bis 3 mm und/oder 0,03 bis 3 mm vorliegen.

Der wenigstens eine Blähgraphit hat bevorzugt eine Korngröße im Bereich von wenigstens etwa 10 µm, bevorzugter von etwa 10 bis etwa 5000 µm, bevorzugter von etwa 10 µm bis etwa 2000 µm, insbesondere etwa 10 bis etwa 1500 µm. Bevorzugt hat der Blähgraphit eine Korngrößenverteilung von d₅₀ = 44 µm und/oder d_{17,5} < 300 µm und 85,5 ≥ 300 µm. Geeignete Blähgraphite sind im Handel erhältlich.

Das wenigstens eine Blähgraphit (Komponente Ad) ist bevorzugt ausgewählt aus der Gruppe bestehend aus unmodifiziertem Blähgraphit, Einlagerungsverbindungen von Wasser, Schwefelsäure, Salpetersäure, Essigsäure, Lewissäuren und/oder sonstigen starken Säuren in Graphit und Gemischen davon.

Der Blähgraphit hat in der intumeszierenden Komponente den Zweck, als Krustenbildner und Krustenstabilisator zu wirken. Durch mehr oder weniger starkes Aufblähen des Graphits entsteht eine lockere und gut isolierende bis dichte und hohe Stabilität verleihende Struktur. Dadurch ist Blähgraphit maßgeblich für die Brandschutzwirkung verantwortlich.

Der Anteil des wenigstens einen Blähgraphits beträgt vorzugsweise 5 bis 90 Gew.-%, bevorzugt 15 bis 45 Gew.-%, bezogen auf die Gesamtmenge der intumeszierenden Komponente A).

Aluminiumhydroxid im Rahmen der vorliegenden Erfindung kann beispielsweise synthetisch durch Fällen aus Aluminiumsalzlösung mit Ammoniak oder Alkalihydroxid und nachfolgendem Trocknen hergestellt werden. Aluminiumhydroxid ist beispielsweise auch als mineralisches Produkt (z.B. Tonerde) erhältlich.

Das Aluminiumhydroxyd (Komponente Ae) ist vorzugsweise Aluminiumtrihydroxyd.

Aluminiumhydroxid ist in der intumeszierenden Komponente (A) als Flammschutzmittel wirksam. Im Brandfall spaltet sich Wasser ab und entzieht der Umgebung Energie. Durch die Verdampfung des Wassers tritt eine Verdrängung des Sauerstoffs im Gasraum ein.

Der Anteil des Aluminiumhydroxyds (Komponente Ae) beträgt vorzugsweise 5 bis 90 Gew.-%, bevorzugt 10 bis 25 Gew.-%, bezogen auf die Gesamtmenge der intumeszierenden Komponente A).

In einer speziellen Ausführungsform umfasst die intumeszierende Komponente A) Melamin, Pentaerythrit, Ammoniumpolyphosphat, Blähgraphit und Aluminiumhydroxid und ist besonders bevorzugt Halogen-frei.

In einer bevorzugten Ausführungsform umfasst die intumeszierende Komponente A),
- 5 bis 90 Gew.-% des wenigstens einen Cyanursäurederivats bzw. der Komponente Aa),
- 5 bis 90 Gew.-% des wenigstens einen Zuckerpolyols bzw. der Komponente Ab)
- 5 bis 90 Gew.-% des wenigstens einen Ammoniumpolyphosphats bzw. der Komponente Ac),
- 5 bis 90 Gew.-% des wenigstens einen Blähgraphits bzw. der Komponente Ad) und
- 5 bis 90 Gew.-% des Aluminiumhydroxid bzw. der Komponente e),
wobei die Gew.-% auf das Gesamtgewicht der Komponente (A) bezogen sind.

In einer weiter bevorzugten Ausführungsform umfasst die intumeszierende Komponente A),
- 5 bis 20 Gew.-% des wenigstens einen Cyanursäurederivats bzw. der Komponente Aa),
- 5 bis 20 Gew.-% des wenigstens einen Zuckerpolyols bzw. der Komponente Ab)
- 15 bis 45 Gew.-% des wenigstens einen Ammoniumpolyphosphats bzw. der Komponente Ac),
- 15 bis 45 Gew.-% des wenigstens einen Blähgraphits bzw. der Komponente Ad) und
- 10 bis 25 Gew.-% des Aluminiumhydroxid bzw. der Komponente e),
wobei die Gew.-% auf das Gesamtgewicht der Komponente (A) bezogen sind.

In einer speziell bevorzugten Ausführungsform besteht die intumeszierende Komponente A) im Wesentlichen aus Melamin, Pentaerythrit, Ammoniumpolyphosphat, Blähgraphit und Aluminiumhydroxid. Weiter bevorzugt besteht die intumeszierende Komponente A) aus Melamin, Pentaerythrit, Ammoniumpolyphosphat, Blähgraphit und Aluminiumhydroxid.

Der Anteil der intumeszierenden Komponente A) im erfindungsgemäßen Brandschutzelement beträgt bevorzugt 2 bis 98 Gew.-%, weiter bevorzugt 5 bis 65 Gew.-%, weiter bevorzugt 10 bis 50 Gew.-%, weiter bevorzugt 10 bis 35 Gew.-%, wobei die Gew.-% auf das Brandschutzelement bezogen sind.

In einer bevorzugten Ausführungsform ist die intumeszierende Komponente A) im Wesentlichen frei von Isocyanaten und Isocyanat-haltigen Verbindungen. Der Gehalt an Isocyanaten und Isocyanat-haltigen Verbindungen beträgt üblicherweise höchstens 20 Gew.-%, bevorzugt höchstens 10 Gew.-%, weiter bevorzugt höchstens 5 Gew.-%, weiter bevorzugt höchstens 2 Gew.-%, weiter bevorzugt höchstens 1 Gew.-%, bezogen auf die Gesamtmenge der intumeszierenden Komponente A).

In einer bevorzugten Ausführungsform ist die intumeszierende Komponente A) im Wesentlichen frei von Bor und Bor-haltigen Verbindungen. Der Gehalt an Bor und Bor-haltigen Verbindungen beträgt üblicherweise höchstens 20 Gew.-%, bevorzugt höchstens 10 Gew.-%, weiter bevorzugt höchstens 5 Gew.-%, weiter bevorzugt höchstens 2 Gew.-%, weiter bevorzugt höchstens 1 Gew.-%, bezogen auf die Gesamtmenge der intumeszierenden Komponente A).

### Polymermatrix B)

Die Polymermatrix B) ist erfindungsgemäß erhältlich durch Reaktion
- einer ersten Komponente B1) umfassend wenigstens ein Hydroxyl- und/oder Amino-funktionalisiertes gesättigtes oder ungesättigtes Polyolefin, und
- einer zweiten Komponente B2) umfassend wenigstens ein mit wenigstens einer aktivierten Carbonylgruppe funktionalisiertes gesättigtes oder ungesättigtes Polyolefin.

In einer speziell bevorzugten Ausführungsform ist die Polymermatrix B) im Wesentlichen frei von Isocyanaten und Isocyanat-haltigen Verbindungen. Der Gehalt an Isocyanaten und Isocyanat-haltigen Verbindungen beträgt üblicherweise höchstens 20 Gew.-%, bevorzugt höchstens 10 Gew.-%, weiter bevorzugt höchstens 5 Gew.-%, weiter bevorzugt höchstens 2 Gew.-%, weiter bevorzugt höchstens 1 Gew.-%, bezogen auf die Gesamtmenge der intumeszierenden Komponente B).

Das wenigstens eine Hydroxyl- und/oder Amino-funktionalisierte gesättigte oder ungesättigte Polyolefin B1) ist beispielsweise ein mehrfach ungesättigtes Polyolefin wie Polybutadien-Homo- oder -Copolymere. Dieses kann linear oder verzweigt sein und ist vorzugsweise linear. Das Polymer kann vorzugsweise -OH Gruppen tragen, die vorzugsweise endständig am Polymerrückgrat stehen. Bei den Aminogruppen kann es sich um primäre und/oder sekundäre Aminogruppen handeln, wobei primäre Aminogruppen bevorzugt sind. Weitere funktionelle Gruppen am Polymer sind generell möglich, aber nicht bevorzugt.

Vorzugsweise ist das Hydroxyl- und/oder Amino-funktionalisierte Polymer Hydroxyl-funktionalisiert. Vorzugsweise stehen die Hydroxylgruppen endständig, das Polymer ist vorzugsweise Hydroxylterminiert.

In einer bevorzugten Ausführungsform ist das gesättigte oder ungesättigte Polyolefin B1) ausgewählt unter Polymeren die mittels Polymerisation von Alken-Monomeren und/oder Dien-Monomeren erhältlich sind. Mögliche Monomere sind C₂-C₁₀-Alkene wie beispielsweise Ethen, Propen, Buten, Penten, Hexen, Septen, Octen, sowie alle Strukturisomere davon und C₄-C₁₀-Diene wie Butadien, Pentadien, Hexadien, Septadien, Octadien, sowie alle Strukturisomere davon. Die Monomere können linear oder gegebenenfalls verzweigt sein. Bevorzugt umfassen die Monomere wenigstens ein Monomer ausgewählt unter 1,3-Butadien und 2-Methylbuta-1,3-dien. Weiter bevorzugt umfassen die Monomere wenigstens 50 Gew.-%, weiter bevorzugt wenigstens 70 Gew.-%, weiter bevorzugt wenigstens 90 Gew.-% an Monomeren ausgewählt unter 1,3-Butadien und 2-Methylbuta-1,3-dien, wobei 1,3-Butadien bevorzugt ist.

In einer speziellen Ausführungsform umfasst das Polymer B1) ein Hydroxyl-terminiertes Polybutadien, welches die folgende Struktur (I) aufweist. Dabei sind x+y+z=1.

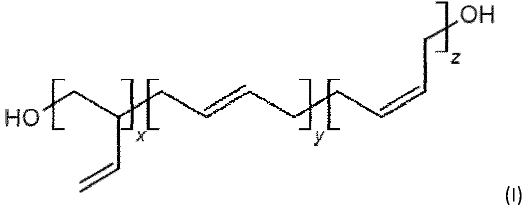

Bevorzugt ist x im Bereich von 0,12 bis 0,32, y im Bereich von 0,48 bis 0,68, z im Bereich von 0,10 bis 0,30, mit der Maßgabe, dass x+y+z = 1 ist. Weiter bevorzugt ist x im Bereich von 0,20 bis 0,24, y im Bereich von 0,56 bis 0,60, z im Bereich von 0,18 bis 0,22, mit der Maßgabe, dass x+y+z = 1 ist. In einer weiter bevorzugten Ausführungsform ist x etwa 0,22, y etwa 0,58 und z etwa 0,20.

Die Viskosität bei 30 °C, gemessen mit DIN EN ISO 3219, liegt bevorzugt im Bereich von 3000 mPa s bis 6500 mPa s, weiter bevorzugt im Bereich von 4000 mPa s bis 5500 mPa s.

Die Hydroxylzahl, gemessen mit DIN EN ISO 4629-2, liegt bevorzugt im Bereich von 39 mg KOH/g bis 56 mg KOH/g, weiter bevorzugt im Bereich von 44 mg KOH/g bis 51 mg KOH/g.

Die zahlenmittlere Molmasse Mn, gemessen mit Gel-Permeations-Chromatographie GPC, liegt bevorzugt im Bereich von 1500 g/mol bis 4000 g/mol, weiter bevorzugt im Bereich von 2400 g/mol bis 3400 g/mol.

Die mittlere OH Funktionalität, die aus der zahlenmittleren Molmasse M nun der Hydroxylzahl berechnet werden kann, liegt bevorzugt im Bereich von 2,1 bis 3,5, weiter bevorzugt im Bereich von 2,3 bis 2,7.

Die Dichte bei 20 °C, gemessen mit DIN ISO 2811-1 liegt bevorzugt im Bereich von 0,85 g/cm³ bis 0,97 g/cm³, weiter bevorzugt im Bereich von 0,89 g/cm³ bis 0,92 g/cm³, weiter bevorzugt im Bereich von 0,90 g/cm³ bis 0,92 g/cm³.

Die lodzahl, gemessen mit DIN 53241, liegt bevorzugt im Bereich von 400 g lod/100 g bis 460 g lod/100 g, weiter bevorzugt im Bereich von 420 g lod/100 g bis 440 g lod/100 g.

Die Glasübergangstemperatur Tg, gemessen mit DIN EN ISO 11357-1 liegt bevorzugt im Bereich von -90 °C bis -70 °C, weiter bevorzugt im Bereich von -85 °C bis -75 °C.

Das wenigstens mit wenigstens einer aktivierten Carbonylgruppe funktionalisierte gesättigte oder ungesättigte Polyolefin B2) ist beispielsweise ein mehrfach ungesättigtes Polyolefin wie Polybutadien-Homo- oder -Copolymere oder ein gesättigtes Polyolefin. Das Polymer kann linear oder verzweigt sein und ist vorzugsweise linear.

Unter aktivierten Carbonylgruppen sind beispielsweise Carbonsäureanhydride und Carbonsäurechloride zu verstehen. Carbonsäureanhydride sind beispielsweise Bernsteinsäureanhydrid, Glutarsäureanhydrid, Maleinsäureanhydrid. Bevorzugt ist Maleinsäureanhydrid. Die aktivierten Carbonylgruppen können entlang des Polymerrückgrats und/oder terminal stehen, wobei die sich die Funktionalisierung bevorzugt am Polymerrückgrat befindet. Weitere funktionelle Gruppen am Polymer sind generell möglich, aber nicht bevorzugt.

Vorzugsweise ist das mit wenigstens einer aktivierten Carbonylgruppe funktionalisiertes gesättigtes oder ungesättigtes Polyolefin B2) Dicarbonsäureanhydrid-funktionalisiert. Dicarbonsäureanhydridgruppe ist bevorzugt aus gewählt ist unter Bernsteinsäureanhydrid, Glutarsäureanhydrid und Maleinsäureanhydrid, wobei Maleinsäureanhydrid besonders bevorzugt ist.

In einer bevorzugten Ausführungsform ist das gesättigte oder ungesättigte Polyolefin B2) ausgewählt unter Polymeren die mittels Polymerisation von Alken-Monomeren und/oder Dien-Monomeren erhältlich sind. Mögliche Monomere sind C₂-C₁₀-Alkene wie beispielsweise Ethen, Propen, Buten, Penten, Hexen, Septen, Octen, sowie alle Strukturisomere davon und C₄-C₁₀-Diene wie Butadien, Pentadien, Hexadien, Septadien, Octadien, sowie alle Strukturisomere davon. Die Monomere können linear oder gegebenenfalls verzweigt sein. Bevorzugt umfassen die Monomere wenigstens ein Monomer ausgewählt unter 1,3-Butadien und 2-Methylbuta-1,3-dien. Weiter bevorzugt umfassen die Monomere wenigstens 50 Gew.-%, weiter bevorzugt wenigstens 70 Gew.-%, weiter bevorzugt wenigstens 90 Gew.-% an Monomeren ausgewählt unter 1,3-Butadien und 2-Methylbuta-1,3-dien, wobei 1,3-Butadien bevorzugt ist.

In einer speziellen Ausführungsform umfasst das Polymer B2) ein Maleinsäureanhydrid-Addukt eines 1,4-cis-Polybutadiens, welches die folgende Struktur (II) aufweist. Dabei sind x+y+z+q=1. Dabei sind bevorzugt Bernsteinsäureanhydrid-Gruppen entlang der Polymerketten statistisch verteilt.

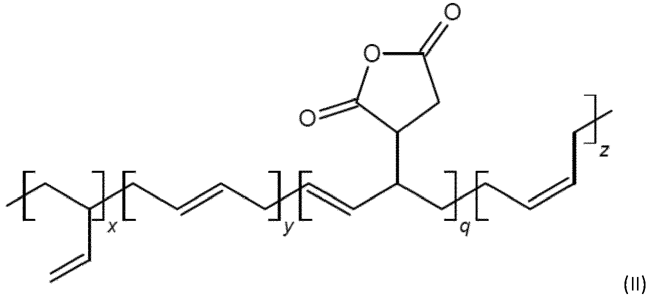

Die Viskosität bei 20 °C, gemessen mit DIN EN ISO 3219, liegt bevorzugt im Bereich von 4500 mPa s bis 10500 mPa s, weiter bevorzugt im Bereich von 5500 mPa s bis 9500 mPa s. weiter bevorzugt im Bereich von 6000 mPa s bis 9000 mPa s.

Die Säurezahl (als Dicarbonsäure), gemessen mit DIN EN ISO 2114, liegt bevorzugt im Bereich von 60 mg KOH/g bis 100 mg KOH/g, weiter bevorzugt im Bereich von 70 mg KOH/g bis 90 mg KOH/g.

Die zahlenmittlere Molmasse Mn, gemessen mit Gel-Permeations-Chromatographie GPC, liegt bevorzugt im Bereich von 2000 g/mol bis 4000 g/mol, weiter bevorzugt im Bereich von 2800 g/mol bis 3200 g/mol.

Die Dichte bei 20 °C, gemessen mit DIN ISO 2811-1 liegt bevorzugt im Bereich von 0,91 g/cm³ bis 0,98 g/cm³, weiter bevorzugt im Bereich von 0,94 g/cm³ bis 0,96 g/cm³.

Die lodzahl, gemessen mit DIN 53241, liegt bevorzugt im Bereich von 360 g lod/100 g bis 440 g lod/100 g, weiter bevorzugt im Bereich von 380 g lod/100 g bis 420 g lod/100 g.

Die Glasübergangstemperatur Tg, gemessen mit DIN EN ISO 11357-1 liegt bevorzugt im Bereich von -105 °C bis -85 °C, weiter bevorzugt im Bereich von -100 °C bis -90 °C.

Die Polymermatrix ist erfindungsgemäß erhältlich durch Reaktion der ersten Komponente B1) mit der zweiten Komponente B2). Das Mengenverhältnis der Komponente B1) und B2) ist daher in der Regel so zu wählen, dass die Komponente B2) vorzugsweise in großem Überschuss eingesetzt wird. Übliche Mengenverhältnisse der Komponente B1) zur Komponente B2) liegen üblicherweise im Bereich von 100:50 bis 100:300; weiter bevorzugt im Bereich von 100:80 bis100:200, weiter bevorzugt im Bereich von 100:100 bis 100:150, jeweils bezogen auf Gew.-%.

Der Anteil der Polmyermatrix B) im erfindungsgemäßen Brandschutzelement beträgt bevorzugt 2 bis 98 Gew.-%, weiter bevorzugt 35 bis 95 Gew.-%, weiter bevorzugt 50 bis 90 Gew-%, weiter bevorzugt 65 bis 90 Gew.-%, wobei die Gew.-% auf das Brandschutzelement bezogen sind.

In einer bevorzugten Ausführungsform ist die Polymermatrix B) im Wesentlichen frei von Polyurethanen und Polyurethan-haltigen Verbindungen. Der Gehalt an Polyurethanen und Polyurethan-haltigen Verbindungen beträgt üblicherweise höchstens 20 Gew.-%, bevorzugt höchstens 10 Gew.-%, weiter bevorzugt höchstens 5 Gew.-%, weiter bevorzugt höchstens 2 Gew.-%, weiter bevorzugt höchstens 1 Gew.-%, bezogen auf die Gesamtmenge der intumeszierenden Komponente B).

Die Aushärtung der Polymermatrix B) kann in einer speziellen Ausführungsform wie in der folgenden Abbildung gezeigt erfolgen. In der Variante a) erfolgt die Umsetzung mit einem Amin R^{a}-NH₂. In einer Variante b) erfolgt die Umsetzung mit einem Alkohol und/oder Polyol R^{b}-OH. Vorzugsweise erfolgt die Variante b), wobei R^{b}-OH ein Hydroxy-terminiertes Polymer darstellt, besonders bevorzugt gemäß der hierin definierten Komponente B1).

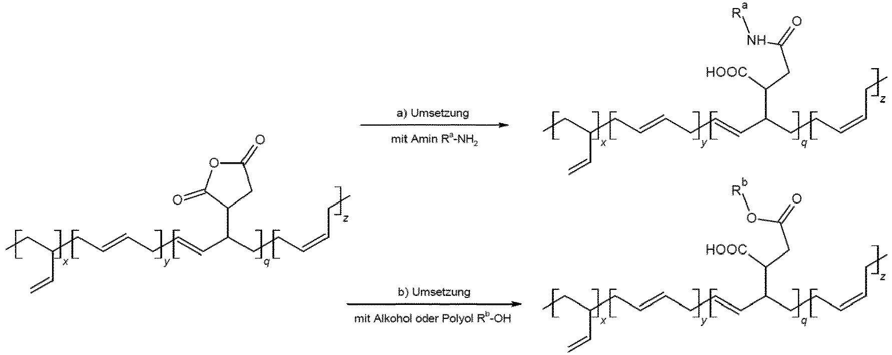

Andere Reaktionen und Mechanismen zur Aushärtung der Polymermatrix B) sind nicht ausgeschlossen.

In einer bevorzugten Ausführungsform ist Polymermatrix B) erhältlich durch Reaktion
- einer ersten Komponente B1) umfassend wenigstens ein Hydroxyl- und/oder Amino-funktionalisiertes gesättigtes oder ungesättigtes Polyolefin, und
- einer zweiten Komponente B2) umfassend wenigstens ein mit wenigstens einer aktivierten Carbonylgruppe funktionalisiertes gesättigtes oder ungesättigtes Polyolefin, sowie
- einer Vernetzerkomponente B3) umfassend wenigstens ein verzweigtes Polyetherpolyol.

Geeignete verzweigte Polyetherpolyole, welche in der vorliegenden Polymermatrix B) als Vernetzerkomponente dienen können, sind dem Fachmann aus dem Stand der Technik bekannt.

Ein geeignetes Polyetherpolyol hat vorzugsweise wenigstens einer der folgenden Eigenschaften: a) hydrophob; b) niedrigviskos; c) hohe Shore D; d) schwer verseifbar; e) hohe Reaktivität; f) OH Zahl im Bereich vom 260 bis 360; g) Viskosität im Bereich von 600 bis 1600 mPa s (25 °C Brookfield RVT); g) Wassergehalt < 0,2 %; i) Säurezahl < 3.

### Zusammensetzung

Das Brandschutzsystem umfasst erfindungsgemäß die intumeszierende Komponente A) und die Polymermatrix B) umfassend B1) und B2).

Bevorzugt umfasst das Brandschutzelement 2 bis 98 Gew.-% der intumeszierenden Komponente A) und 2 bis 98 Gew.-% der Polymermatrix B), wobei die Gew.-% auf das Gesamtgewicht von Komponente A) und Komponente B) bezogen sind. Weiter bevorzugt umfasst das Brandschutzelement 5 bis 65 Gew. %, weiter bevorzugt 10 bis 50 Gew.-%, insbesondere bevorzugt 10 bis 35 % der intumeszierenden Komponente A) und 35 bis 95 Gew. %, weiter bevorzugt 50 bis 90 Gew.-%, insbesondere bevorzugt 65 bis 90 Gew.-% der Polymermatrix B), wobei die Gew.-% auf das Gesamtgewicht von Komponente A) und Komponente B) bezogen sind.

In einer bevorzugten Ausführungsform umfasst das Brandschutzelement wenigstens 50 Gew.-% der Komponenten A) und B), wobei die Gew.-% auf der Brandschutzelement bezogen sind. Weiter bevorzugt umfasst das Brandschutzelement wenigstens 70 Gew.-%, weiter bevorzugt wenigstens 80 Gew.-% und noch weiter bevorzugt wenigstens 90 Gew.-% der Komponenten A) und B), wobei die Gew.-% auf der Brandschutzelement bezogen sind.

Das Brandschutzelement kann Hilfsstoffe sowie anorganische bzw. mineralische Substanzen und/oder organische Substanzen umfassen. Deren Anteil beträgt in der Regel weniger als 50 Gew.-%, bevorzugt weniger als 30 Gew.-%, weiter bevorzugt weniger als 20 Gew.-%, weiter bevorzugt weniger als 10 Gew.-% und noch weiter bevorzugt weniger als 5 Gew.-%, bezogen auf das Brandschutzelement.

Das Brandschutzelement kann weitere Hilfsstoffe umfassen.

Die Hilfsstoffe sind bevorzugt ausgewählt sind unter Benetzungsmittel, Entschäumer, Konservierungsmittel, Lösungsmittel, Farbpigmente, Verdickungsmittel, Thixotropierungsmittel, Zellregulatoren, Zellstabilisatoren, Katalysatoren, Trocknungsmittel und/oder Treibmittel.

Der Anteil der Hilfsstoffe beträgt in der Regel weniger als 50 Gew.-%, bevorzugt weniger als 30 Gew.-%, weiter bevorzugt weniger als 20 Gew.-%, und noch weiter bevorzugt weniger als 10 Gew.-% bezogen auf das Brandschutzelement.

Das Brandschutzelement kann weitere anorganische bzw. mineralische und/oder organische Substanzen umfassen.

Die anorganischen bzw. mineralischen Substanzen sind bevorzugt ausgewählt aus der Gruppe bestehend aus Kalk (Luftkalk, hydraulisch erhärtender Kalk), Zement, Gips, Silikate, Kalziumsilikate, Vermiculit, Anhydridbinder, Magnesiabinder, hydraulische Tragschichtbinder als Bindemittel und Zuschlagstoffe wie mineralische Gesteine, Hochofenschlacke, Mineral- und Kunststoff- oder Stahlfasern, Betonzuschlagsmittel, Betonzusatzstoffe

Die organischen Substanzen sind bevorzugt ausgewählt aus der Gruppe bestehend aus Polyurethanen, Phenolharzen, Polystyrolen, Polyolefinen, wie Polyethylen und/oder Polybutylen, Melaminharzen, Melaminharzschäumen, synthetischem oder natürlichem Kautschuk, Latex-, Acrylatdispersionen, Cellulose, Bitumen, Elastomeren und Gemischen davon.

Der Anteil dieser weiteren anorganischen bzw. mineralischen und/oder organischen Substanzen beträgt in der Regel weniger als 50 Gew.-%, bevorzugt weniger als 30 Gew.-%. Weiter bevorzugt weniger als 20 Gew.-%, und noch weiter bevorzugt weniger als 10 Gew.-% bezogen auf das Brandschutzelement.

In den erfindungsgemäßen Brandschutzelementen sind die Komponenten A) und B) in der Regel homogen verteilt. Unter einer homogenen Verteilung der intumeszierenden Komponente A) in der Polymermatrix B) im Sinne der Erfindung wird eine annähernd gleichmäßige Verteilung der Komponente A) im gesamten Volumen der Matrix B) verstanden. So ist beispielsweise bevorzugt die Abweichung der Konzentration an Komponente A) in der Matrix B) pro 1 cm³ im Vergleich zu demselben Volumen an anderer, bevorzugter an jeder anderen Stelle des Brandschutzelements ≤ (kleiner/gleich) 20 %, weiter bevorzugt ≤ 10 %, weiter bevorzugt ≤ 5 %, insbesondere ≤ 1 %.

Die erfindungsgemäßen Brandschutzelemente können in verschiedenen Formen vorliegen, beispielsweise in Form von Konstruktionselementen, Passstücken, Formkörpern, und/oder Auskleidungen und vorzugsweise für/als/in Wänden, Decken und Sandwichelementen, Ummantelungen, Gehäusen, Abdichtungen, Abschottungen, Isolierungen bzgl. Elektrizität, Hitze, Kälte, Schall und Schwingungen und/oder in Form von Beschichtungen für Wände, Decken und Gehäusen vorliegt und/oder in Form von Zylindern (Stopfen), Platten, Konstruktionselementen, Quadern, Pyramiden, Halbschalen, Hohlkörpern, Manschetten, Verschlusselementen, Bekleidungen, Ummantelungen, Dichtungsprofilen und/oder Rohrisolationsschläuchen.

In einer bevorzugten Ausführungsform liegt das Brandschutzelement in Form von Konstruktionselementen, Passstücken, Formkörpern, und/oder Auskleidungen und vorzugsweise für/als/in Wänden, Decken und Sandwichelementen, Ummantelungen, Gehäusen, Abdichtungen, Abschottungen, Isolierungen bzgl. Elektrizität, Hitze, Kälte, Schall und Schwingungen vor.

In einer bevorzugten Ausführungsform liegt das Brandschutzelement in Form von Beschichtungen für Wände, Decken und Gehäusen vor.

In einer bevorzugten Ausführungsform liegt das Brandschutzelement in Form von Zylindern (Stopfen), Platten, Konstruktionselementen, Quadern, Pyramiden, Halbschalen, Hohlkörpern, Manschetten, Verschlusselementen, Bekleidungen, Ummantelungen, Dichtungsprofilen und/oder Rohrisolationsschläuchen vor.

Das Brandschutzelement kann in vielfältigen Anwendungen eingesetzt werden. Eine bevorzugte Anwendung ist im Bereich von Landfahrzeugen, Wasserfahrzeugen, Luftfahrzeugen und/oder im Fahrzeugbau.

Eine speziell bevorzugte Anwendung der erfindungsgemäßen Brandschutzelemente ist in Schienenfahrzeugen. Insbesondere aufgrund der mechanischen Eigenschaften sind die Brandschutzelemente besonders vorteilhaft in Schienenfahrzeugen, speziell zur Abschottung von Kabeldurchbrüchen, Kabelkanälen, und Kabelschächten.

### Feuerhemmendes Bauteil

Ein weiterer Gegenstand der vorliegenden Erfindung sind feuerhemmende Bauteile umfassend die erfindungsgemäßen Brandschutzelemente mit wenigstens einer daran angeordneten Deckschickt.

In einer bevorzugten Ausführungsform ist das Bauteil sandwichartig aufgebaut. In einer bevorzugten Ausführungsform bildet das erfindungsgemäße Brandschutzelement das Kernmaterial des Bauteils. Besonders bevorzugt ist wenigstens eine Deckschicht am Bauteil außen angeordnet während das erfindungsgemäße Brandschutzelement das Kernmaterial bildet.

Die Deckschicht kann aus einem Material gebildet sein, ausgewählt aus der Gruppe, bestehend aus Metallen, Mineralwolle, Foamglas, Calciumsilikat, Gips, Gipsverbundwerkstoffen, Holz, Holzverbundwerkstoffen, Polyvinylchlorid, Polyolefin, Glasfasergewebe, Tapeten, Keramikwerkstoffen und Gemischen davon.

### Verfahren

Ein weiterer Gegenstand der vorliegenden Erfindung ist ein Verfahren zur Herstellung eines Brandschutzelements umfassend
a) Bereitstellen der Komponente B1) und optionales Vermischen mit einem oder mehreren Bestandteil(en) der Komponente A);
b) Bereitstellen der Komponente B2) und optionales Vermischen mit einem oder mehreren Bestandteil(en) der Komponente A);
c) homogenes Mischen der in Schritt a) und in Schritt b) erhaltenen Zusammensetzungen;
d) gegebenenfalls Vermischen mit weiteren Bestandteilen; und
e) Aushärten der in Schritt d) erhaltenen Zusammensetzung.

Die Schritte a) und/oder b) können unabhängig voneinander und in beliebiger Reihenfolge durchgeführt werden. Die bereitgestellte Komponente kann vor und/oder nach dem optionalen Vermischen gelagert werden.

Der Schritt c), das homogene Mischen der in Schritt a) und in Schritt b) erhaltenen Zusammensetzungen kann in einem geeigneten Behälter, einer geeigneten Vorrichtung oder einer geeigneten Anlage durchgeführt werden. Sofern in dem Verfahren eine Kartusche und/oder ein Schlauchbeutel verwendet werden soll, eignet sich bevorzugt ein Statikmischer.

In Schritt d) können nach dem homogenen Mischen der in Schritt a) und in Schritt b) erhaltenen Zusammensetzungen weitere Bestandteile zugegeben werden. Dabei kommen insbesondere die oben genannten optionalen Komponenten in Betracht, wie beispielsweise Hilfsstoffe und/oder anorganische bzw. mineralische und/oder organische Substanzen.

Die Aushärtung in Schritt e) kann sowohl inhärent durch das vorherige Mischen der Zusammensetzungen als auch durch externe Trigger wie beispielsweise Wärme/Hitze und/oder Licht ausgelöst werden.

### Vergussmasse

Ein weiterer Gegenstand der vorliegenden Erfindung ist eine Vergussmasse umfassend zwei Zusammensetzungen: Eine erste Zusammensetzung umfassend wenigstens ein Hydroxyl- und/oder Amino-funktionalisiertes gesättigtes oder ungesättigtes Polyolefin B1) und optional einen oder mehrere Bestandteil(e) ausgewählt unter Aa) Cyanursäurederivaten, Ab) Zuckerpolyolen, Ac) Phosphor und/oder Phosphor-haltigen Verbindungen, Ad) Blähgraphit und Ae) Aluminiumhydroxid und eine zweite Zusammensetzung umfassend wenigstens ein mit wenigstens einer aktivierten Carbonylgruppe funktionalisiertes gesättigtes oder ungesättigtes Polyolefin B2) und optional einen oder mehrere Bestandteil(e) ausgewählt unter Aa) Cyanursäurederivaten, Ab) Zuckerpolyolen, Ac) Phosphor und/oder Phosphor-haltigen Verbindungen, Ad) Blähgraphit und Ae) Aluminiumhydroxid. Erfindungsgemäß umfasst die Vergussmasse wenigstens Phosphor und/oder eine Phosphor-haltige Verbindung (Ac).

In einer bevorzugten Ausführungsform umfasst die Vergussmasse die intumeszierende Komponente A), welche hierin, insbesondere im Rahmen des Brandschutzelements beschrieben wurde. Auf diese wird vollumfänglich Bezug genommen wird.

In einer bevorzugten Ausführungsform umfasst die Vergussmasse die Polymerkomponente B) umfassend die Komponenten B1) und B2, welche hierin, insbesondere im Rahmen des Brandschutzelements, beschrieben wurden. Auf diese wird vollumfänglich Bezug genommen wird.

In einer bevorzugten Ausführungsform umfasst die Vergussmasse vorzugsweise wenigstens ein Cyanursäurederivat Aa), wenigstens ein Zuckerpolyol Ab), wenigstens Phorphor und/oder Phosphor-haltige Verbindungen Ac), wenigstens einen Blähgraphit Ad) und Aluminiumhydroxid Ae). Besonders bevorzugt sind zur intumeszierenden Komponente offenbarten die Ausführungsformen, auf die vollumfänglich Bezug genommen wird.

In einer bevorzugten Variante umfasst eine Zusammensetzung der Vergussmasse alle Bestandteile der intumeszierenden Komponente.

### Verwendung

Die hierin offenbarten Brandschutzelemente sowie die Bauteile und Vergussmassen sind besonders zur Anwendung im Fahrzeugbau und/oder in Landfahrzeugen, Wasserfahrzeugen, Luftfahrzeugen geeignet.

Eine speziell bevorzugte Anwendung der erfindungsgemäßen Brandschutzelemente ist in Schienenfahrzeugen. Insbesondere aufgrund der mechanischen Eigenschaften sind die Brandschutzelemente besonders vorteilhaft in Schienenfahrzeugen, speziell zur Abschottung von Kabeldurchbrüchen, Kabelkanälen, und Kabelschächten.

### BEISPIELE

Die folgenden Beispiele erläutern die Erfindung.

Es wurden die folgenden Komponenten/Verbindungen/Produkte eingesetzt:
- Brandschutzadditivmischung A: Intumeszierende Wirkstoffmischung umfassend Ammoniumpolyphosphat, Blähgraphit, Pentaerythrit, Melamin, Aluminiumtrihydroxid; Produkt "intumeszierende Wirkstoffmischung 10.184" der Firma Karl Zimmermann GmbH.
- Brandschutzadditiv B: Ammoniumpolyphosphat.
- Brandschutzadditiv C: Blähgraphit.
- Brandschutzadditiv D: Aluminiumtrihydroxid.
- Brandschutzadditiv E: Kaolin.
- Bindemittel: OH-terminiertes Polybutadien gemäß der oben genannten Struktur (I) und den entsprechenden Parametern.
- Vernetzer: verzweigtes Polyetherpolyol.
- Katalysator: tertiäres Amin; beispielsweise Produkt "Polycat 9" von Evonik Industries.
- Verdicker: pyrogene Kieselsäure, hydrophobiert; beispielsweise Produkt "Aerosil^{®} 200" von Evonik Industries.
- Antioxidans: beispielsweise Produkt "Irganox" von BASF SE.
- Farbstoff: Eisenoxidpigment; beispielsweise Produkt "Bayferrox^{®} rot" von Lanxess.
- Härter: Maleinsäureanhydrid-funktionalisiertes Polybutadien gemäß der oben genannten Struktur (II) und den entsprechenden Parametern.
- Entschäumer: organo-modifiziertes Polysiloxan; beispielsweise Produkt "TEGO^{®} Airex 900" von Evonik Industries.

### Rezeptur 1 / Brandschutzelement 1

### Komponente 1

- Brandschutzadditivmischung A: 50,1 g (33,4 %)
- Bindemittel: 70,5 g (47,0 %)
- Vernetzer: 9,9 g (6,6 %)
- Katalysator: 13,5 g (9,0 %)
- Verdicker: 3,0 g (2,0 %)
- Antioxidans: 1,2 g (0,8 %)
- Farbstoff: 1,8 g (1,2 %)

Die Bestandteile der Komponente 1 wurden homogen vermischt.

### Komponente 2:

- Härter: 150 g (100 %)

Die Komponente 1 und die Komponente 2 wurden im Verhältnis 1:1 entweder mittels Side-by-Side oder mittels Coaxial-Kartusche verfüllt.

Das erhaltene Brandschutzelement wurde ausführlich charakterisiert. Die Brandschutzelemente zeigen hervorragende mechanische Eigenschaften. Die Brandschutzelemente härten in weniger als 5 Minuten aus. Die Brandschutzelemente zeigen eine hervorragende Wasserdichtigkeit und Druckdichtigkeit. Die Brandschutzelemente erfüllen Brandschutzanforderungen gemäß EN 45545 für R22/R23 und erreichten in Brandversuchen Feuerwiderstandsdauern von deutlich über 30 Minuten (Stahlwand, Einbautiefe von 60 mm).

### Rezeptur 2 / Brandschutzelement 2

### Komponente 1

- Brandschutzadditiv B: 39,15 g (26,1 %)
- Bindemittel: 60,0 g (40,0 %)
- Vernetzer: 7,5 g (5,00 %)
- Katalysator: 7,35 g (4,9 %
- Brandschutzadditiv C: 15,0 g (10,0 %)
- Antioxidans: 1,2 g (0,8 %)
- Entschäumer: 0,3g (0,2 %)
- Farbstoff: 1,5 g (1,0 %)
- Brandschutzadditiv D: 18,0 g (12,0 %)

Die Bestandteile der Komponente 1 wurden homogen vermischt.

### Komponente 2

- Härter: 90,0 g (60,0 %)
- Brandschutzadditiv E: 60,0 g (40,0 %)

Die Bestandteile der Komponente 2 wurden homogen vermischt.

Die Komponente 1 und die Komponente 2 wurden im Verhältnis 1:1 entweder mittels Side-by-Side oder mittels Coaxial-Kartusche verfüllt.

### Rezeptur 3 / Brandschutzelement 3

### Komponente 1

- Brandschutzadditivmischung A: 45,0 g (30,0 %)
- Bindemittel: 87,15 g (58,1 %)
- Vernetzer: 7,5 g (5,00 %)
- Katalysator: 7,35 g (4,9 %)
- Antioxidans: 1,2 g (0,8 %)
- Entschäumer: 0,3 g (0,2 %)
- Farbstoff: 1,5 g (1,0 %)

Die Bestandteile der Komponente 1 wurden homogen vermischt.

### Komponente 2

- Härter: 117,0 g (78,0 %)
- Brandschutzadditivmischung E: 33,0 g (22,0 %)

Die Bestandteile der Komponente 2 wurden homogen vermischt.

Die Komponente 1 und die Komponente 2 wurden im Verhältnis 1:1 entweder mittels Side-by-Side oder mittels Coaxial-Kartusche verfüllt.

### BEVORZUGTE AUSFÜHRUNGSFORMEN

E01. Brandschutzelement, umfassend
A) eine intumeszierende Komponente und
B) eine Polymermatrix, erhältlich durch Reaktion
   - einer ersten Komponente B1) umfassend wenigstens ein Hydroxyl- und/oder Amino-funktionalisiertes gesättigtes oder ungesättigtes Polyolefin, und
   - einer zweiten Komponente B2) umfassend wenigstens ein mit wenigstens einer aktivierten Carbonylgruppe funktionalisiertes gesättigtes oder ungesättigtes Polyolefin.

E02. Brandschutzelement nach Ausführungsform E01, dadurch gekennzeichnet, dass
- die intumeszierende Komponente A) im Wesentlichen frei ist von Halogenen und halogenhaltigen Verbindungen; und/oder
- die Polymermatrix B) im Wesentlichen frei ist von Isocyanaten und isocyanathaltigen Verbindungen.

E03. Brandschutzelement nach einer der Ausführungsformen E01 oder E02, dadurch gekennzeichnet, dass die intumeszierende Komponente wenigstens Phosphor und/oder eine Phosphor-haltige Verbindung umfasst.

E04. Brandschutzelement nach Ausführungsformen E03, dadurch gekennzeichnet, dass die intumeszierende Komponente zusätzlich wenigstens einen weiteren Bestandteil umfasst, der vorzugsweise ausgewählt ist unter Cyanursäurederivaten, Zuckerpolyolen, Blähgraphit und Aluminiumhydroxid.

E05. Brandschutzelement nach einer der Ausführungsformen E01 bis E04, dadurch gekennzeichnet, dass die intumeszierende Komponente wenigstens zwei, bevorzugt wenigstens drei, weiter bevorzugt wenigstens vier der folgenden Bestandteile umfasst:
Aa) wenigstens ein Cyanursäurederivat,
Ab) wenigstens ein Zuckerpolyol,
Ac) wenigstens Phosphor und/oder eine Phosphor-haltige Verbindung,
Ad) wenigstens einen Blähgraphit,
Ae) Aluminiumhydroxid.

E06. Brandschutzelement nach einer der Ausführungsformen E01 bis E05, dadurch gekennzeichnet, dass die intumeszierende Komponente
Aa) wenigstens ein Cyanursäurederivat,
Ab) wenigstens ein Zuckerpolyol,
Ac) wenigstens Phosphor und/oder eine Phosphor-haltige Verbindung,
Ad) wenigstens einen Blähgraphit und
Ae) Aluminiumhydroxid
umfasst.

E07. Brandschutzelement nach einer der Ausführungsformen E04 bis E06, dadurch gekennzeichnet, dass das wenigstens eine Cyanursäurederivat ausgewählt ist aus der Gruppe, bestehend aus Cyanamid, Dicyanamid, Dicyandiamid, Guanidin und dessen Salzen, Biguanidin, Melamincyanurat, Cyanursäuresalze, Cyanursäureester, Cyanursäureamide und Gemische davon, insbesondere Cyanursäureamid (Melamin).

E08. Brandschutzelement nach einer der Ausführungsformen E04 bis E07, dadurch gekennzeichnet, dass das wenigstens eine Cyanursäurederivat Cyanursäureamid (Melamin) ist.

E09. Brandschutzelement nach einer der Ausführungsformen E04 bis E08, dadurch gekennzeichnet, dass das wenigstens eine Zuckerpolyol ein 4- bis 6-wertiger Alkohol ist und bevorzugt ausgewählt ist aus der Gruppe, bestehend aus Threit, Erythrit, Pentaerythrit, Arabit, Aldonit, Xylit, Sorbit, Mannit, Dulcit, Formit und Gemischen davon.

E10. Brandschutzelement nach einer der Ausführungsformen E04 bis E09, dadurch gekennzeichnet, dass das wenigstens eine Zuckerpolyol Pentaerythrit ist.

E11. Brandschutzelement nach einer der Ausführungsformen E04 bis E10, dadurch gekennzeichnet, dass die Komponente umfassend wenigstens Phosphor und/oder eine Phosphor-haltige Verbindung wenigstens ein Polyphosphat umfasst.

E12. Brandschutzelement nach einer der Ausführungsformen E04 bis E11, dadurch gekennzeichnet, dass die Komponente umfassend wenigstens Phosphor und/oder eine Phosphor-haltige Verbindung wenigstens ein Ammoniumpolyphosphat ist.

E13. Brandschutzelement nach einer der Ausführungsformen E04 bis E12, dadurch gekennzeichnet, dass die Komponente umfassend wenigstens Phosphor und/oder eine Phosphor-haltige Verbindung wenigstens ein Polyphosphat umfasst, das bevorzugt ausgewählt ist aus der Gruppe bestehend aus Ammoniummetaphosphorsäure, Ammoniumorthophosphorsäure, Ammoniumsalzen von höher kondensierten Phosphorsäuren und Gemischen davon.

E14. Brandschutzelement nach einer der Ausführungsformen E04 bis E13, dadurch gekennzeichnet, dass der wenigstens eine Blähgraphit ausgewählt ist aus der Gruppe, bestehend aus unmodifiziertem Blähgraphit, Einlagerungsverbindungen von Wasser, Schwefelsäure, Salpetersäure, Essigsäure, Lewissäuren und/oder sonstigen starken Säuren in Graphit und Gemischen davon.

E15. Brandschutzelement nach einer der Ausführungsformen E04 bis E14, dadurch gekennzeichnet, dass das Aluminiumhydroxid Aluminiumtrihydroxid ist.

E16. Brandschutzelement nach einer der Ausführungsformen E05 bis E15, wobei die Komponente A)
- 5 bis 90 Gew.-% des wenigstens einen Cyanursäurederivats,
- 5 bis 90 Gew.-% des wenigstens einen Zuckerpolyols
- 5 bis 90 Gew.-% des wenigstens einen Ammoniumpolyphosphats,
- 5 bis 90 Gew.-% des wenigstens einen Blähgraphits und
- 5 bis 90 Gew.-% des Aluminiumhydroxid, bezogen auf das Gesamtgewicht der Komponente A), umfasst.

E17. Brandschutzelement nach einer der Ausführungsformen E05 bis E16, wobei die Komponente A)
- 5 bis 20 Gew.-% des wenigstens einen Cyanursäurederivats,
- 5 bis 20 Gew.-% des wenigstens einen Zuckerpolyols
- 15 bis 45 Gew.-% des wenigstens einen Ammoniumpolyphosphats,
- 15 bis 45 Gew.-% des wenigstens einen Blähgraphits und
- 10 bis 25 Gew.-% des Aluminiumhydroxid,
bezogen auf das Gesamtgewicht der Komponente A), umfasst.

E18. Brandschutzelement nach einer der Ausführungsformen E01 bis E17, wobei es sich bei dem Hydroxyl- und/oder Amino-funktionalisierten gesättigten oder ungesättigten Polyolefin der Komponente B1) um ein Hydroxyl-funktionalisiertes Polyolefin handelt.

E19. Brandschutzelement nach einer der Ausführungsformen E01 bis E18, wobei es sich bei dem Hydroxyl- und/oder Amino-funktionalisierten gesättigten oder ungesättigten Polyolefin der Komponente B1) um ein Hydroxyl-terminiertes Polyolefin handelt.

E20. Brandschutzelement nach einer der Ausführungsformen E01 bis E19, wobei das gesättigte oder ungesättigte Polyolefin der Komponente B1) ein ungesättigtes Polyolefin ist.

E21. Brandschutzelement nach einer der Ausführungsformen E01 bis E20, wobei das gesättigte oder ungesättigte Polyolefin der Komponente B1) ausgewählt ist unter Polymeren die mittels Polymerisation von Monomeren umfassend mehrfach ungesättigte Olefine, vorzugsweise Butadien und/oder Isopren erhältlich sind.

E22. Brandschutzelement nach einer der Ausführungsformen E01 bis E21, wobei das gesättigte oder ungesättigte Polyolefin der Komponente B2) ein ungesättigtes Polyolefin ist.

E23. Brandschutzelement nach einer der Ausführungsformen E01 bis E22, wobei das gesättigte oder ungesättigte Polyolefin der Komponente B2) ausgewählt ist unter Polymeren die mittels Polymerisation von Monomeren umfassend mehrfach ungesättigte Olefine, vorzugsweise Butadien und/oder Isopren erhältlich sind.

E24. Brandschutzelement nach einer der Ausführungsformen E01 bis E23, wobei das gesättigte oder ungesättigte Polyolefin der Komponente B2) mit Dicarbonsäureanhydrid funktionalisiert ist.

E25. Brandschutzelement nach einer der Ausführungsformen E01 bis E24, wobei das gesättigte oder ungesättigte Polyolefin der Komponente B2) mit Dicarbonsäureanhydrid funktionalisiert ist, welches ausgewählt ist unter Bernsteinsäureanhydrid, Glutarsäureanhydrid und Maleinsäureanhydrid.

E26. Brandschutzelement nach einer der Ausführungsformen E01 bis E25, wobei das gesättigte oder ungesättigte Polyolefin der Komponente B2) Maleinsäureanhydrid-funktionalisiert ist.

E27. Brandschutzelement nach einer der Ausführungsformen E01 bis E26, umfassend
- 2 bis 98 Gew.-%, bevorzugt 5 bis 65 Gew.-%, weiter bevorzugt 10 bis 50 Gew.-%, insbesondere bevorzugt 10 bis 35 Gew.-% der intumeszierenden Komponente (A) und
- 2 bis 98 Gew.-%, bevorzugt 35 bis 95 Gew.-%, weiter bevorzugt 50 bis 90 Gew.-%, insbesondere bevorzugt 65 bis 90 Gew.-% der Polymermatrix (B),
wobei die Gew.-% auf das Gesamtgewicht von Komponente (A) und Komponente (B) bezogen sind.

E28. Brandschutzelement nach einer der Ausführungsformen E01 bis E27, umfassend 2 bis 98 Gew.-%, bevorzugt 5 bis 65 Gew.-%, weiter bevorzugt 10 bis 50 Gew.-%, insbesondere bevorzugt 10 bis 30 % der intumeszierenden Komponente (A), wobei die Gew.-% auf das Gesamtgewicht von Komponente (A) und Komponente (B) bezogen sind.

E29. Brandschutzelement nach einer der Ausführungsformen E01 bis E28, umfassend 2 bis 98 Gew.-%, bevorzugt 35 bis 95 Gew.-%, weiter bevorzugt 50 bis 90 Gew.-%, insbesondere bevorzugt 70 bis 90 Gew.-% der Polymermatrix (B), wobei die Gew.-% auf das Gesamtgewicht von Komponente (A) und Komponente (B) bezogen sind.

E30. Brandschutzelement nach einer der Ausführungsformen E01 bis E29, umfassend
- 5 bis 65 Gew.-%, der intumeszierenden Komponente (A) und
- 35 bis 95 Gew.-% der Polymermatrix (B),
wobei die Gew.-% auf das Gesamtgewicht von Komponente (A) und Komponente (B) bezogen sind.

E31. Brandschutzelement nach einer der Ausführungsformen E01 bis E30, umfassend
- 10 bis 50 Gew.-% der intumeszierenden Komponente (A) und
- 50 bis 90 Gew.-% der Polymermatrix (B),
wobei die Gew.-% auf das Gesamtgewicht von Komponente (A) und Komponente (B) bezogen sind.

E32. Brandschutzelement nach einer der Ausführungsformen E01 bis E31, umfassend
- 10 bis 30 % der intumeszierenden Komponente (A) und
- 70 bis 90 Gew.-% der Polymermatrix (B),
wobei die Gew.-% auf das Gesamtgewicht von Komponente (A) und Komponente (B) bezogen sind.

E33. Brandschutzelement nach einer der Ausführungsformen E01 bis E32, wobei weitere Hilfsstoffe anwesend sind, die bevorzugt ausgewählt sind unter Benetzungsmittel, Entschäumer, Konservierungsmittel, Lösungsmittel, Farbpigmente, Verdickungsmittel, Thixotropierungsmittel, Zellregulatoren, Zellstabilisatoren, Katalysatoren, Trocknungsmittel und/oder Treibmittel.

E34. Brandschutzelement nach einer der Ausführungsformen E01 bis E33, wobei weitere Hilfsstoffe anwesend sind und diese zu 0 bis 20 Gew.-%, bezogen auf das Gesamtgewicht des Brandschutzelements, anwesend sind.

E35. Brandschutzelement nach einer der Ausführungsformen E01 bis E34, wobei weitere anorganische bzw. mineralische und/oder organische Substanzen anwesend sind, vorzugsweise
- anorganische bzw. mineralische Substanzen ausgewählt aus der Gruppe Kalk (Luftkalk, hydraulisch erhärtender Kalk), Zement, Gips, Silikate, Kalziumsilikate, Vermiculit, Anhydridbinder, Magnesiabinder, hydraulische Tragschichtbinder als Bindemittel und Zuschlagstoffe wie mineralische Gesteine, Hochofenschlacke, Mineral- und Kunststoff- oder Stahlfasern, Betonzuschlagsmittel, Betonzusatzstoffe und/oder
- organische Substanzen ausgewählt aus der Gruppe bestehend aus Polyurethanen, Phenolharzen, Polystyrolen, Polyolefinen, wie Polyethylen und/oder Polybutylen, Melaminharzen, Melaminharzschäumen, synthetischem oder natürlichem Kautschuk, Latex-, Acrylatdispersionen, Cellulose, Bitumen, Elastomeren und Gemischen davon.

E36. Brandschutzelement nach einer der Ausführungsformen E01 bis E35, wobei weitere anorganische bzw. mineralische Substanzen anwesend sind, die ausgewählt sind aus der Gruppe Kalk (Luftkalk, hydraulisch erhärtender Kalk), Zement, Gips, Silikate, Kalziumsilikate, Vermiculit, Anhydridbinder, Magnesiabinder, hydraulische Tragschichtbinder als Bindemittel und Zuschlagstoffe wie mineralische Gesteine, Hochofenschlacke, Mineral- und Kunststoff- oder Stahlfasern, Betonzuschlagsmittel, Betonzusatzstoffe.

E37. Brandschutzelement nach einer der Ausführungsformen E01 bis E36, wobei weitere organische Substanzen anwesend sind, die ausgewählt sind aus der Gruppe bestehend aus Polyurethanen, Phenolharzen, Polystyrolen, Polyolefinen, wie Polyethylen und/oder Polybutylen, Melaminharzen, Melaminharzschäumen, synthetischem oder natürlichem Kautschuk, Latex-, Acrylatdispersionen, Cellulose, Bitumen, Elastomeren und Gemischen davon.

E38. Brandschutzelement nach einer der Ausführungsformen E01 bis E37, wobei weitere anorganische bzw. mineralische Substanzen und/oder organische Substanzen anwesend sind und diese zu 0 bis 20 Gew.-%, bezogen auf das Gesamtgewicht des Brandschutzelements, anwesend sind.

E39. Brandschutzelement nach einer der Ausführungsformen E01 bis E38, dadurch gekennzeichnet, dass die intumeszierende Komponente (A) im Wesentlichen frei ist von Bor und Bor-haltigen Verbindungen.

E40. Brandschutzelement nach einer der Ausführungsformen E01 bis E39, dadurch gekennzeichnet, dass die Polymermatrix (B) frei ist von Polyurethanen und Polyurethan-haltigen Verbindungen.

E41. Brandschutzelement nach einer der Ausführungsformen E01 bis E40, wobei die intumeszierende Komponente (A) homogen in der Polymermatrix (B) verteilt ist.

E42. Brandschutzelement nach einer der Ausführungsformen E01 bis E41, wobei das Brandschutzelement in Form von Konstruktionselementen, Passstücken, Formkörpern, und/oder Auskleidungen ist und vorzugsweise für/als/in Wänden, Decken und Sandwichelementen, Ummantelungen, Gehäusen, Abdichtungen, Abschottungen, Isolierungen bzgl. Elektrizität, Hitze, Kälte, Schall und Schwingungen vorliegt.

E43. Brandschutzelement nach einer der Ausführungsformen E01 bis E42, wobei das Brandschutzelement in Form von Beschichtungen für Wände, Decken und Gehäusen vorliegt.

E44. Brandschutzelement nach einer der Ausführungsformen E01 bis E43, wobei das Brandschutzelement in Form von Zylindern (Stopfen), Platten, Konstruktionselementen, Quadern, Pyramiden, Halbschalen, Hohlkörpern, Manschetten, Verschlusselementen, Bekleidungen, Ummantelungen, Dichtungsprofilen und/oder Rohrisolationsschläuchen vorliegt.

F01. Feuerhemmendes Bauteil umfassend ein Brandschutzelement nach einer der Ausführungsformen E01 bis E44 mit wenigstens einer daran angeordneten Deckschicht.

F02. Feuerhemmendes Bauteil nach Ausführungsform F01, wobei das Bauteil sandwichartig ausgeführt ist.

F03. Feuerhemmendes Bauteil nach Ausführungsform F01 oder F02, wobei die Deckschicht aus einem Material gebildet ist, welches ausgewählt ist aus der Gruppe bestehend aus Metallen, Mineralwolle, Schaumglas, Calciumsilikat, Gips, Gipsverbundwerkstoffen, Holz, Holzverbundwerkstoffen, Polyvinylchlorid, Polyolefin, Glasfaser-, Kunststofffaser-, Metallfasergewebe, Tapeten, Keramikwerkstoffen und Gemischen davon.

F04. Feuerhemmendes Bauteil nach einer der Ausführungsformen F01 bis F03, wobei das Brandschutzelement das Kernmaterial des Bauteils bildet.

G01. Verfahren zur Herstellung eines Brandschutzelements nach einer der Ausführungsformen E01 bis E44, umfassend
a) Bereitstellen der Komponente B1) und optionales Vermischen mit einem oder mehreren Bestandteil(en) der Komponente (A);
b) Bereitstellen der Komponente B2) und optionales Vermischen mit einem oder mehreren Bestandteil(en) der Komponente (A);
c) homogenes Mischen der in Schritt a) und in Schritt b) erhaltenen Zusammensetzungen;
d) gegebenenfalls Vermischen mit weiteren Bestandteilen; und
e) Aushärten der in Schritt d) erhaltenen Zusammensetzung.

H01. 2-Komponenten-Vergussmasse umfassend
eine erste Zusammensetzung umfassend
   - wenigstens ein Hydroxyl- und/oder Amino-funktionalisiertes gesättigtes oder ungesättigtes Polyolefin (B1), und
   - optional einen oder mehrere Bestandteil(e) ausgewählt unter Aa) Cyanursäurederivaten, Ab) Zuckerpolyolen, Ac) Phosphor und/oder Phosphor-haltigen Verbindungen, Ad) Blähgraphit und Ae) Aluminiumhydroxid;
und eine zweite Zusammensetzung umfassend
   - wenigstens ein mit wenigstens einer aktivierten Carbonylgruppe funktionalisiertes gesättigtes oder ungesättigtes Polyolefin (B2), und
   - optional einen oder mehrere Bestandteil(e) ausgewählt unter Aa) Cyanursäurederivaten, Ab) Zuckerpolyolen, Ac) Phosphor und/oder Phosphor-haltigen Verbindungen, Ad) Blähgraphit und Ae) Aluminiumhydroxid;
wobei die 2-Komponenten-Vergussmasse wenigstens Phosphor und/oder eine Phosphor-haltige Verbindung (Ac) umfasst

H02. 2-Komponenten-Vergussmasse nach Ausführungsform H01, die wenigstens zwei, bevorzugt wenigstens drei, weiter bevorzugt wenigstens vier der folgenden komponenten umfasst: wenigstens ein Cyanursäurederivat (Aa), wenigstens ein Zuckerpolyol (Ab), wenigstens Phosphor und/oder eine Phosphor-haltige Verbindung (Ac), wenigstens einen Blähgraphit (Ad), Aluminiumhydroxid (Ae).

H03. 2-Komponenten-Vergussmasse nach Ausführungsform H01 oder H02, die wenigstens ein Cyanursäurederivat (Aa), wenigstens ein Zuckerpolyol (Ab), wenigstens Phosphor und/oder eine Phosphor-haltige Verbindung (Ac), wenigstens einen Blähgraphit (Ad) und Aluminiumhydroxid (Ae) umfasst.

I01. Verwendung eines Brandschutzelements nach einer der Ausführungsformen E01 bis E44 in Landfahrzeugen, Wasserfahrzeugen, Luftfahrzeugen und/oder im Fahrzeugbau; und besonders bevorzugt in Schienenfahrzeugen.

I02. Verwendung eines Brandschutzelements nach einer der Ausführungsformen E01 bis E44 in Schienenfahrzeugen.

I03 Verwendung eines feuerhemmenden Bauteils nach einer der Ausführungsformen F01 bis F04 in Landfahrzeugen, Wasserfahrzeugen, Luftfahrzeugen und/oder im Fahrzeugbau; und besonders bevorzugt in Schienenfahrzeugen.

I04 Verwendung eines feuerhemmenden Bauteils nach einer der Ausführungsformen F01 bis F04 in Schienenfahrzeugen.

I05 Verwendung einer 2-Komponenten-Vergussmasse nach einer der Ausführungsformen H01 bis H03 in Landfahrzeugen, Wasserfahrzeugen, Luftfahrzeugen und/oder im Fahrzeugbau; und besonders bevorzugt in Schienenfahrzeugen.

I05 Verwendung einer 2-Komponenten-Vergussmasse nach einer der Ausführungsformen H01 bis H03 in Schienenfahrzeugen.

## Patentansprüche

1. Brandschutzelement, umfassend
A) eine intumeszierende Komponente und
B) eine Polymermatrix, erhältlich durch Reaktion
- einer ersten Komponente B1) umfassend wenigstens ein Hydroxyl- und/oder Amino-funktionalisiertes gesättigtes oder ungesättigtes Polyolefin, und
- einer zweiten Komponente B2) umfassend wenigstens ein mit wenigstens einer aktivierten Carbonylgruppe funktionalisiertes gesättigtes oder ungesättigtes Polyolefin.

2. Brandschutzelement nach Anspruch 1, **dadurch gekennzeichnet, dass**
- die intumeszierende Komponente A) im Wesentlichen frei ist von Halogenen und halogenhaltigen Verbindungen; und/oder
- die Polymermatrix B) im Wesentlichen frei ist von Isocyanaten und isocyanathaltigen Verbindungen.

3. Brandschutzelement nach einem der Ansprüche 1 oder 2, **dadurch gekennzeichnet, dass** die intumeszierende Komponente wenigstens Phosphor und/oder eine Phosphor-haltige Verbindung umfasst und bevorzugt zusätzlich wenigstens einen weiteren Bestandteil umfasst, der vorzugsweise ausgewählt ist unter Cyanursäurederivaten, Zuckerpolyolen, Blähgraphit und Aluminiumhydroxid.

4. Brandschutzelement nach einem der Ansprüche 1 bis 3, **dadurch gekennzeichnet, dass** die intumeszierende Komponente
Aa) wenigstens ein Cyanursäurederivat,
Ab) wenigstens ein Zuckerpolyol,
Ac) wenigstens Phosphor und/oder eine Phosphor-haltige Verbindung,
Ad) wenigstens einen Blähgraphit und
Ae) Aluminiumhydroxid umfasst;
und bevorzugt **gekennzeichnet dadurch, dass**
- das wenigstens eine Cyanursäurederivat ausgewählt ist aus der Gruppe bestehend aus Cyanamid, Dicyanamid, Dicyandiamid, Guanidin und dessen Salzen, Biguanidin, Melamincyanurat, Cyanursäuresalze, Cyanursäureester, Cyanursäureamide und Gemische davon, insbesondere Cyanursäureamid (Melamin); und/oder
- das wenigstens eine Zuckerpolyol ein 4- bis 6-wertiger Alkohol ist und bevorzugt ausgewählt ist aus der Gruppe bestehend aus Threit, Erythrit, Pentaerythrit, Arabit, Aldonit, Xylit, Sorbit, Mannit, Dulcit, Formit und Gemischen davon, insbesondere Pentaerythrit; und/oder
- die Komponente umfassend wenigstens Phosphor und/oder eine Phosphor-haltige Verbindung wenigstens ein Polyphosphat umfasst, das bevorzugt ausgewählt ist unter Ammoniumpolyphosphaten, vorzugsweise aus der Gruppe bestehend aus Ammoniummetaphosphorsäure, Ammoniumorthophosphorsäure, Ammoniumsalzen von höher kondensierten Phosphorsäuren und Gemischen davon; und/oder
- der wenigstens eine Blähgraphit ausgewählt ist aus der Gruppe bestehend aus unmodifiziertem Blähgraphit, Einlagerungsverbindungen von Wasser, Schwefelsäure, Salpetersäure, Essigsäure, Lewissäuren und/oder sonstigen starken Säuren in Graphit und Gemischen davon; und/oder
- das Aluminiumhydroxyd Aluminiumtrihydroxyd ist.

5. Brandschutzelement nach einem der Ansprüche 1 bis 4,
- wobei es sich bei dem Hydroxyl- und/oder Amino-funktionalisierten gesättigten oder ungesättigten Polyolefin der Komponente B1) bevorzugt um ein Hydroxyl-funktionalisiertes, weiter bevorzugt um ein Hydroxyl-terminiertes Polyolefin handelt, und/oder
- wobei das gesättigte oder ungesättigte Polyolefin der Komponente B1) ein ungesättigtes Polyolefin ist, das bevorzugt ausgewählt ist unter Polymeren die mittels Polymerisation von Monomeren umfassend mehrfach ungesättigte Olefine, vorzugsweise Butadien und/oder Isopren erhältlich sind.

6. Brandschutzelement nach einem der Ansprüche 1 bis 5,
- wobei das gesättigte oder ungesättigte Polyolefin der Komponente B2) ein ungesättigtes Polyolefin ist, welches bevorzugt ausgewählt ist unter Polymeren die mittels Polymerisation von Monomeren umfassend mehrfach ungesättigte Olefine, vorzugsweise Butadien und/oder Isopren erhältlich sind; und/oder
- wobei das gesättigte oder ungesättigte Polyolefin der Komponente B2) mit Dicarbonsäureanhydrid funktionalisiert ist, welches bevorzugt aus gewählt ist unter Bernsteinsäureanhydrid, Glutarsäureanhydrid und Maleinsäureanhydrid, und das Polyolefin der zweiten Komponente B2) besonders bevorzugt Maleinsäureanhydrid-funktionalisiert ist.

7. Brandschutzelement nach einem der Ansprüche 1 bis 6, umfassend 2 bis 98 Gew.-%, bevorzugt 5 bis 65 Gew.-%, weiter bevorzugt 10 bis 50 Gew.-%, insbesondere bevorzugt 10 bis 30 Gew.-% der intumeszierenden Komponente A) und 2 bis 98 Gew.-%, bevorzugt 35 bis 95 Gew.-%, weiter bevorzugt 50 bis 90 Gew.-%, insbesondere bevorzugt 70 bis 90 Gew.-% der Polymermatrix B), wobei die Gew.-% auf das Gesamtgewicht von Komponente A) und Komponente B) bezogen sind.

8. Brandschutzelement nach einem der Ansprüche 1 bis 7, wobei weitere Hilfsstoffe anwesend sind, die bevorzugt ausgewählt sind unter Benetzungsmittel, Entschäumer, Konservierungsmittel, Lösungsmittel, Farbpigmente, Verdickungsmittel, Thixotropierungsmittel, Zellregulatoren, Zellstabilisatoren, Katalysatoren, Trocknungsmittel und/oder Treibmittel, wobei die Hilfsstoffe zu 0 bis 30 Gew.-%, bezogen auf das Gesamtgewicht des Brandschutzelements, anwesend sind.

9. Brandschutzelement nach einem der Ansprüche 1 bis 8, wobei weitere anorganische bzw. mineralische und/oder organische Substanzen anwesend sind, vorzugsweise
- anorganische bzw. mineralische Substanzen ausgewählt aus der Gruppe Kalk (Luftkalk, hydraulisch erhärtender Kalk), Zement, Gips, Silikate, Kalziumsilikate, Vermiculit, Anhydridbinder, Magnesiabinder, hydraulische Tragschichtbinder als Bindemittel und Zuschlagstoffe wie mineralische Gesteine, Hochofenschlacke, Mineral- und Kunststoff- oder Stahlfasern, Betonzuschlagsmittel, Betonzusatzstoffe und/oder
- organische Substanzen ausgewählt aus der Gruppe bestehend aus Polyurethanen, Phenolharzen, Polystyrolen, Polyolefinen, wie Polyethylen und/oder Polybutylen, Melaminharzen, Melaminharzschäumen, synthetischem oder natürlichem Kautschuk, Latex-, Acrylatdispersionen, Cellulose, Bitumen, Elastomeren und Gemischen davon.

10. Brandschutzelement nach einem der Ansprüche 1 bis 9, **dadurch gekennzeichnet, dass**
- die intumeszierende Komponente (A) im Wesentlichen frei ist von Bor und Bor-haltigen Verbindungen; und/oder
- die Polymermatrix (B) frei ist von Polyurethanen und Polyurethan-haltigen Verbindungen.

11. Brandschutzelement nach einem der Ansprüche 1 bis 10, wobei die intumeszierende Komponente (A) homogen in der Polymermatrix (B) verteilt ist.

12. Brandschutzelement nach einem der Ansprüche 1 bis 11,
- wobei das Brandschutzelement in Form von Konstruktionselementen, Passstücken, Formkörpern, und/oder Auskleidungen ist und vorzugsweise für/als/in Wänden, Decken und Sandwichelementen, Ummantelungen, Gehäusen, Abdichtungen, Abschottungen, Isolierungen bzgl. Elektrizität, Hitze, Kälte, Schall und Schwingungen vorliegt; und/oder
- wobei das Brandschutzelement in Form von Beschichtungen für Wände, Decken und Gehäusen vorliegt; und/oder
- wobei das Brandschutzelement in Form von Zylindern (Stopfen), Platten, Konstruktionselementen, Quadern, Pyramiden, Halbschalen, Hohlkörpern, Manschetten, Verschlusselementen, Bekleidungen, Ummantelungen, Dichtungsprofilen und/oder Rohrisolationsschläuchen vorliegt.

13. Feuerhemmendes Bauteil umfassend ein Brandschutzelement nach einem der Ansprüche 1 bis 12 mit wenigstens einer daran angeordneten Deckschicht.

14. Feuerhemmendes Bauteil nach Anspruch 13,
- wobei das Bauteil sandwichartig aufgebaut ist; und/oder
- wobei die Deckschicht aus einem Material gebildet ist, welches ausgewählt ist aus der Gruppe bestehend aus Metallen, Mineralwolle, Schaumglas, Calciumsilikat, Gips, Gipsverbundwerkstoffen, Holz, Holzverbundwerkstoffen, Polyvinylchlorid, Polyolefin, Glasfaser-, Kunststofffaser-, Metallfasergewebe, Tapeten, Keramikwerkstoffen und Gemischen davon; und/oder
- wobei das Brandschutzelement das Kernmaterial des Bauteils bildet.

15. Verfahren zur Herstellung eines Brandschutzelements nach einem der Ansprüche 1 bis 12, umfassend
a) Bereitstellen der Komponente B1) und optionales Vermischen mit einem oder mehreren Bestandteil(en) der Komponente (A);
b) Bereitstellen der Komponente B2) und optionales Vermischen mit einem oder mehreren Bestandteil(en) der Komponente (A);
c) homogenes Mischen der in Schritt a) und in Schritt b) erhaltenen Zusammensetzungen;
d) gegebenenfalls Vermischen mit weiteren Bestandteilen; und
e) Aushärten der in Schritt d) erhaltenen Zusammensetzung.

16. 2-Komponenten-Vergussmasse umfassend
eine erste Zusammensetzung umfassend
- wenigstens ein Hydroxyl- und/oder Amino-funktionalisiertes gesättigtes oder ungesättigtes Polyolefin (B1), und
- optional einen oder mehrere Bestandteil(e) ausgewählt unter Aa) Cyanursäurederivaten, Ab) Zuckerpolyolen, Ac) Phosphor und/oder Phosphor-haltigen Verbindungen, Ad) Blähgraphit und Ae) Aluminiumhydroxid;
und eine zweite Zusammensetzung umfassend
- wenigstens ein mit wenigstens einer aktivierten Carbonylgruppe funktionalisiertes gesättigtes oder ungesättigtes Polyolefin (B2), und
- optional einen oder mehrere Bestandteil(e) ausgewählt unter Aa) Cyanursäurederivaten, Ab) Zuckerpolyolen, Ac) Phosphor und/oder Phosphor-haltigen Verbindungen, Ad) Blähgraphit und Ae) Aluminiumhydroxid;
wobei die 2-Komponenten-Vergussmasse wenigstens Phosphor und/oder eine Phosphor-haltige Verbindung (Ac) umfasst.

17. Verwendung eines Brandschutzelements nach einem der Ansprüche 1 bis 12 und/oder einem feuerhemmenden Bauteil nach einem der Ansprüche 13 bis 14 und /oder einer 2-Komponenten-Vergussmasse nach Anspruche 16 in Landfahrzeugen, Wasserfahrzeugen, Luftfahrzeugen und/oder im Fahrzeugbau; und besonders bevorzugt in Schienenfahrzeugen.

## Claims

1. Fire protection element, comprising
A) an intumescent component and
B) a polymer matrix obtainable by reaction of
- a first component B1) comprising at least one hydroxyl- and/or amino-functionalized saturated or unsaturated polyolefin, and
- a second component B2) comprising at least one saturated or unsaturated polyolefin functionalized with at least one activated carbonyl group.

2. Fire protection element according to Claim 1, **characterized in that**
- the intumescent component A) is substantially free from halogens and halogen-containing compounds; and/or
- the polymer matrix B) is substantially free from isocyanates and isocyanate-containing compounds.

3. Fire protection element according to either of Claims 1 and 2, **characterized in that** the intumescent component comprises at least phosphorus and/or a phosphorus-containing compound and preferably additionally comprises at least one further constituent which is preferably selected from cyanuric acid derivatives, sugar polyols, expandable graphite and aluminium hydroxide.

4. Fire protection element according to any one of Claims 1 to 3, **characterized in that** the intumescent component comprises
Aa) at least one cyanuric acid derivative,
Ab) at least one sugar polyol,
Ac) at least phosphorus and/or a phosphorus-containing compound,
Ad) at least one expandable graphite and
Ae) aluminium hydroxide;
and preferably **characterized in that**
- the at least one cyanuric acid derivative is selected from the group consisting of cyanamide, dicyanamide, dicyandiamide, guanidine and its salts, biguanidine, melamine cyanurate, cyanuric salts, cyanuric esters, cyanuric amides and mixtures thereof, especially cyanuramide (melamine); and/or
- the at least one sugar polyol is a 4- to 6-hydric alcohol and is preferably selected from the group consisting of threitol, erythritol, pentaerythritol, arabitol, aldonitol, xylitol, sorbitol, mannitol, dulcitol, formitol and mixtures thereof, especially pentaerythritol; and/or
- the component comprising at least phosphorus and/or a phosphorus-containing compound comprises at least one polyphosphate which is preferably selected from ammonium polyphosphates, preferably from the group consisting of ammonium metaphosphoric acid, ammonium orthophosphoric acid, ammonium salts of more highly condensed phosphoric acids and mixtures thereof; and/or
- the at least one expandable graphite is selected from the group consisting of unmodified expandable graphite, inclusion compounds of water, sulfuric acid, nitric acid, acetic acid, Lewis acids and/or other strong acids in graphite and mixtures thereof; and/or
- the aluminium hydroxide is aluminium trihydroxide.

5. Fire protection element according to any one of Claims 1 to 4,
- wherein the hydroxyl- and/or amino-functionalized saturated or unsaturated polyolefin of component B1) is preferably a hydroxyl-functionalized, more preferably a hydroxyl-terminated, polyolefin, and/or
- wherein the saturated or unsaturated polyolefin of component B1) is an unsaturated polyolefin which is preferably selected from polymers obtainable via polymerization of monomers comprising polyunsaturated olefins, preferably butadiene and/or isoprene.

6. Fire protection element according to any one of Claims 1 to 5,
- wherein the saturated or unsaturated polyolefin of component B2) is an unsaturated polyolefin which is preferably selected from polymers obtainable via polymerization of monomers comprising polyunsaturated olefins, preferably butadiene and/or isoprene; and/or
- wherein the saturated or unsaturated polyolefin of component B2) is functionalized with dicarboxylic anhydride which is preferably selected from succinic anhydride, glutaric anhydride and maleic anhydride, and the polyolefin of the second component B2) is particularly preferably maleic anhydride-functionlized.

7. Fire protection element according to any one of Claims 1 to 6, comprising 2 to 98 wt%, preferably 5 to 65 wt%, more preferably 10 to 50 wt%, especially preferably 10 to 30 wt%, of the intumescent component A) and 2 to 98 wt%, preferably 35 to 95 wt%, more preferably 50 to 90 wt%, especially preferably 70 to 90 wt%, of the polymer matrix B), the wt% being based on the total weight of component A) and component B).

8. Fire protection element according to any one of Claims 1 to 7, wherein further auxiliaries are present which are preferably selected from wetting agents, defoamers, preservatives, solvents, colour pigments, thickeners, thixotropic agents, cell regulators, cell stabilizers, catalysts, drying agents and/or propellants, the auxiliaries being present at 0 to 30 wt%, based on the total weight of the fire protection element.

9. Fire protection element according to any one of Claims 1 to 8, wherein further inorganic or mineral and/or organic substances are present, preferably
- inorganic or mineral substances selected from the group of lime (air lime, hydraulically hardening lime), cement, gypsum, silicates, calcium silicates, vermiculite, anhydride binders, magnesia binders, hydraulic base-course binders as binding agents, and aggregates such as mineral rocks, blast furnace slag, mineral and plastic or steel fibres, concrete aggregates, concrete admixtures and/or
- organic substances selected from the group consisting of polyurethanes, phenolic resins, polystyrenes, polyolefins, such as polyethylene and/or polybutylene, melamine resins, melamine resin foams, synthetic or natural rubber, latex dispersions, acrylate dispersions, cellulose, bitumen, elastomers and mixtures thereof.

10. Fire protection element according to any one of Claims 1 to 9, **characterized in that**
- the intumescent component (A) is substantially free from boron and boron-containing compounds; and/or
- the polymer matrix (B) is free from polyurethanes and polyurethane-containing compounds.

11. Fire protection element according to any one of Claims 1 to 10, wherein the intumescent component (A) is distributed homogeneously in the polymer matrix (B).

12. Fire protection element according to any one of Claims 1 to 11,
- wherein the fire protection element is in the form of construction elements, adapters, shaped bodies, and/or linings and is present preferably for/as/in walls, ceilings and sandwich elements, claddings, housings, seals, partitions, insulations in relation to electricity, heat, cold, noise and vibrations; and/or
- wherein the fire protection element is present in the form of coatings for walls, ceilings and housings; and/or
- wherein the fire protection element is present in the form of cylinders (plugs), panels, construction elements, blocks, pyramids, half-shells, hollow bodies, sleeves, closure elements, linings, claddings, sealing profiles and/or pipe insulation hoses.

13. Fire-inhibiting component comprising a fire protection element according to any one of Claims 1 to 12 with at least one outer layer disposed thereon.

14. Fire-inhibiting component according to Claim 13,
- wherein the component has a sandwich-like construction; and/or
- wherein the outer layer is formed from a material which is selected from the group consisting of metals, mineral wool, foam glass, calcium silicate, gypsum, gypsum composite materials, wood, wood composite materials, polyvinyl chloride, polyolefin, glass fibre fabrics, plastic fibre fabrics, metal fibre fabrics, wallpapers, ceramic materials and mixtures thereof; and/or
- wherein the fire protection element forms the core material of the component.

15. Method for producing a fire protection element according to any of Claims 1 to 12, comprising
a) providing component B1) and optionally mixing it with one or more constituent(s) of component (A) ;
b) providing component B2) and optionally mixing it with one or more constituent(s) of component (A) ;
c) homogeneously mixing the compositions obtained in step a) and in step b);
d) optionally mixing this mixture with further constituents; and
e) curing the composition obtained in step d).

16. 2-Component casting compound comprising
a first composition comprising
- at least one hydroxyl- and/or amino-functionalized saturated or unsaturated polyolefin (B1), and
- optionally one or more constituent(s) selected from Aa) cyanuric acid derivatives, Ab) sugar polyols, Ac) phosphorus and/or phosphorus-containing compounds, Ad) expandable graphite and Ae) aluminium hydroxide;
and a second composition comprising
- at least one saturated or unsaturated polyolefin (B2) functionalized with at least one activated carbonyl group, and
- optionally one or more constituent(s) selected from Aa) cyanuric acid derivatives, Ab) sugar polyols, Ac) phosphorus and/or phosphorus-containing compounds, Ad) expandable graphite and Ae) aluminium hydroxide;
wherein the 2-component casting compound comprises at least phosphorus and/or a phosphorus-containing compound (Ac).

17. Use of a fire protection element according to any one of Claims 1 to 12 and/or of a fire-inhibiting component according to either of Claims 13 and 14 and/or of a 2-component casting compound according to Claim 16 in land vehicles, water vehicles, air vehicles and/or in vehicle construction; and particuarly preferably in rail vehicles.

## Revendications

1. Élément de protection contre l'incendie, comprenant
A) un composant intumescent et
B) une matrice polymère, pouvant être obtenue par la réaction
- d'un premier composant B1) comprenant au moins une polyoléfine saturée ou insaturée, à fonctionnalité hydroxy et/ou amino, et
- d'un deuxième composant B2) comprenant au moins une polyoléfine saturée ou insaturée, fonctionnalisée par au moins un groupe carbonyle activé.

2. Élément de protection contre l'incendie selon la revendication 1, **caractérisé en ce que**
- le composant intumescent A) est essentiellement exempt d'halogènes et de composés halogénés ; et/ou
- la matrice polymère B) est essentiellement exempte d'isocyanates et de composés contenant des isocyanates.

3. Élément de protection contre l'incendie selon l'une quelconque des revendication 1 et 2, **caractérisé en ce que** le composant intumescent comprend au moins du phosphore et/ou un composé phosphoré et de préférence comprend en outre au moins un autre constituant qui est choisi de préférence parmi les dérivés d'acide cyanurique, les polyols glucidiques, le graphite soufflé et l'hydroxyde d'aluminium.

4. Élément de protection contre l'incendie selon l'une quelconque des revendications 1 à 3, **caractérisé en ce que** le composant intumescent comprend
Aa) au moins un dérivé d'acide cyanurique,
Ab) au moins un polyol glucidique,
Ac) au moins du phosphore et/ou un composé phosphoré,
Ad) au moins un graphite soufflé et
Ae) de l'hydroxyde d'aluminium ;
et de préférence **caractérisé en ce que**
- ledit au moins un dérivé d'acide cyanurique est choisi dans le groupe constitué par le cyanamide, le dicyanamide, le dicyandiamide, la guanidine et ses sels, la bisguanidine, le cyanurate de mélamine, les sels d'acide cyanurique, les esters d'acide cyanurique, les amides d'acide cyanurique et des mélanges de ceux-ci, en particulier le cyanuramide (mélamine) ; et/ou
- ledit au moins un polyol glucidique est un alcool tétra- à hexahydrique et est choisi de préférence dans le groupe constitué par le thréitol, l'érythritol, le pentaérythritol, l'arabitol, l'aldonitol, le xylitol, le sorbitol, le mannitol, le dulcitol, le formitol et des mélanges de ceux-ci, en particulier le pentaérythritol ; et/ou
- le composant comprenant au moins du phosphore et/ou un composé phosphoré comprend au moins un polyphosphate, qui est choisi de préférence parmi les polyphosphates d'ammonium, de préférence dans le groupe constitué par le métaphosphate d'ammonium, l'orthophosphate d'ammonium, des sels d'ammonium d'acides phosphoriques hautement condensés et des mélanges de ceux-ci ; et/ou
- ledit au moins un graphite soufflé est choisi dans le groupe constitué par le graphite soufflé non modifié, des composés d'inclusion d'eau, d'acide sulfurique, d'acide nitrique, d'acide acétique, d'acides de Lewis et/ou d'autres acides forts dans du graphite et des mélanges de ceux-ci ; et/ou
- l'hydroxyde d'aluminium est le trihydroxyde d'aluminium.

5. Élément de protection contre l'incendie selon l'une quelconque des revendications 1 à 4,
- dans lequel pour ce qui est de la polyoléfine saturée ou insaturée, à fonctionnalité hydroxy et/ou amino du composant B1) il s'agit de préférence d'une polyoléfine à fonctionnalité hydroxy, encore mieux d'une polyoléfine à terminaison hydroxy, et/ou
- dans lequel la polyoléfine saturée ou insaturée du composant B1) est une polyoléfine insaturée qui est choisie de préférence parmi des polymères qui peuvent être obtenus par polymérisation de monomères comprenant des oléfines polyinsaturées, de préférence le butadiène et/ou l'isoprène.

6. Élément de protection contre l'incendie selon l'une quelconque des revendications 1 à 5,
- dans lequel la polyoléfine saturée ou insaturée du composant B2) est une polyoléfine insaturée qui est choisie de préférence parmi des polymères qui peuvent être obtenus par polymérisation de monomères comprenant des oléfines polyinsaturées, de préférence le butadiène et/ou l'isoprène ; et/ou
- dans lequel la polyoléfine saturée ou insaturée du composant B2) est fonctionnalisée par un anhydride d'acide dicarboxylique, qui est choisi de préférence parmi l'anhydride succinique, l'anhydride glutarique et l'anhydride maléique, et la polyoléfine du deuxième composant B2) est fonctionnalisée de façon particulièrement préférée par l'anhydride maléique.

7. Élément de protection contre l'incendie selon l'une quelconque des revendications 1 à 6, comprenant 2 à 98 % en poids, de préférence 5 à 65 % en poids, encore mieux 10 à 50 % en poids, de façon particulièrement préférée 10 à 30 % en poids du composant intumescent A) et 2 à 98 % en poids, de préférence 35 à 95 % en poids, encore mieux 50 à 90 % en poids, de façon particulièrement préférée 70 à 90 % en poids de la matrice polymère B), les % en poids étant par rapport au poids total du composant A) et du composant B).

8. Élément de protection contre l'incendie selon l'une quelconque des revendications 1 à 7, dans lequel d'autres adjuvants sont présents, qui sont choisis de préférence parmi les agents mouillants, antimousses, conservateurs, solvants, pigments colorés, épaississants, agents de thixotropie, régulateurs de cellules, stabilisants de cellules, catalyseurs, desséchants et/ou agents porogènes, les adjuvants étant présents à raison de 0 à 30 % en poids, par rapport au poids total de l'élément de protection contre l'incendie.

9. Élément de protection contre l'incendie selon l'une quelconque des revendications 1 à 8, dans lequel d'autres substances inorganiques ou minérales et/ou organiques sont présentes, de préférence
- des substances inorganiques ou minérales choisies dans le groupe constitué par la chaux (chaux durcissant à l'air, chaux à durcissement hydraulique), le ciment, le gypse, les silicates, les silicates de calcium, la vermiculite, les liants à base d'anhydride, les liants à base de magnésie, les liants hydrauliques pour couche portante, en tant que liant et des granulats tels que les roches minérales, les laitiers de haut-fourneau, les fibres minérales et de matière plastique ou d'acier, les agrégats pour béton, les additifs pour béton et/ou
- des substances organiques choisies dans le groupe constitué par les polyuréthanes, les résines phénoliques, les polystyrènes, des polyoléfines, telles que le polyéthylène et/ou le polybutylène, les résines mélamine, les mousses de résines mélamine, le caoutchouc naturel ou synthétique, les dispersions de latex, d'acrylate, la cellulose, le bitume, les élastomères et des mélanges de ceux-ci.

10. Élément de protection contre l'incendie selon l'une quelconque des revendications 1 à 9, **caractérisé en ce que**
- le composant intumescent (A) est essentiellement exempt de bore et de composés contenant du bore ; et/ou
- la matrice polymère (B) est exempte de polyuréthanes et de composés contenant du polyuréthane.

11. Élément de protection contre l'incendie selon l'une quelconque des revendications 1 à 10, dans lequel le composant intumescent (A) est réparti de façon homogène dans la matrice polymère (B).

12. Élément de protection contre l'incendie selon l'une quelconque des revendications 1 à 11,
- dans lequel l'élément de protection contre l'incendie est sous forme d'éléments de construction, de pièces ajustées, de corps moulés, et/ou de revêtements et est présent de préférence pour des/en tant que/dans des murs, couvertures et éléments sandwich, chemisages, boîtiers, éléments d'étanchéité, éléments de calfeutrement, isolations pour ce qui concerne l'électricité, la chaleur, le froid, le son et les vibrations ; et/ou
- dans lequel l'élément de protection contre l'incendie se trouve sous forme de revêtements pour murs, couvertures et boîtiers ; et/ou
- dans lequel l'élément de protection contre l'incendie se trouve sous forme de cylindres (bourrage), de plaques, d'éléments de construction, de parallélépipèdes, de pyramides, de demi-coques, de corps creux, de manchons, d'éléments de fermeture, de placages, de chemisages, de joints d'étanchéité profilés et/ou de gaines d'isolation de tubes.

13. Élément de construction ignifuge comprenant un élément de protection contre l'incendie selon l'une quelconque des revendications 1 à 12, comportant au moins une couche extérieure adjacente à ce dernier.

14. Élément de construction ignifuge selon la revendication 13,
- dans lequel l'élément de construction a une structure en sandwich ; et/ou
- dans lequel la couche extérieure est constituée d'une matière qui est choisie dans le groupe constitué par les métaux, la laine de roche, le verre mousse, le silicate de calcium, le gypse, les matériaux composites à base de gypse, le bois, les matériaux composites à base de bois, le poly(chlorure de vinyle), une polyoléfine, les tissus en fibres de verre, fibres de matière plastique, fibres métalliques, les papiers peints, les matériaux céramiques et des mélanges de ceux-ci, et/ou
- dans lequel l'élément de protection contre l'incendie constitue le matériau d'âme de l'élément de construction.

15. Procédé pour la production d'un élément de protection contre l'incendie selon l'une quelconque des revendications 1 à 12, comprenant
a) la fourniture du composant B1) et en option le mélange avec un ou plusieurs constituant(s) du composant (A) ;
b) la fourniture du composant B2) et en option le mélange avec un ou plusieurs constituant(s) du composant (A) ;
c) le mélange homogène des compositions obtenues dans l'étape a) et dans l'étape b) ;
d) éventuellement le mélange avec d'autres constituants ; et
e) le durcissement de la composition obtenue dans l'étape d).

16. Matière à couler bicomposant comprenant
une première composition comprenant
- au moins une polyoléfine (B1) saturée ou insaturée, à fonctionnalité hydroxy et/ou amino, et
- en option un ou plusieurs constituant(s) choisi(s) parmi Aa) les dérivés d'acide cyanurique, Ab) les polyols glucidiques, Ac) le phosphore et/ou les composés phosphorés, Ad) le graphite soufflé et Ae) l'hydroxyde d'aluminium ;
et une deuxième composition comprenant
- au moins une polyoléfine (B2) saturée ou insaturée, fonctionnalisée par au moins un groupe carbonyle activé, et
- en option un ou plusieurs constituant(s) choisi(s) parmi Aa) les dérivés d'acide cyanurique, Ab) les polyols glucidiques, Ac) le phosphore et/ou les composés phosphorés, Ad) le graphite soufflé et Ae) l'hydroxyde d'aluminium ;
la matière à couler bicomposant comprenant au moins du phosphore et/ou un composé phosphoré (Ac).

17. Utilisation d'un élément de protection contre l'incendie selon l'une quelconque des revendications 1 à 12 et/ou d'un élément de construction ignifuge selon l'une quelconque des revendications 13 et 14 et/ou d'une matière à couler bicomposant selon la revendication 16 dans des véhicules terrestres, des véhicules aquatiques, des aéronefs et/ou dans la construction de véhicules ; et de façon particulièrement préférée dans des véhicules sur rail.
